# EUROPÄISCHE PATENTSCHRIFT

(11) **EP 2 728 242 B1**
(45) Veröffentlichungstag und Bekanntmachung des Hinweises auf die Patenterteilung: **25.08.2021**
(21) Anmeldenummer: 12191303.2
(22) Anmeldetag: 05.11.2012
(51) Int. Cl.: F17C 5/00, F17C 7/00, F15B 1/04

(54) **Druckspeichersystem und Verfahren zum Betreiben eines Druckspeichersystems**
Pressure storage system and method for operating the same
Système d'accumulation de pression et procédé de fonctionnement d'un système d'accumulation de pression

(43) Veröffentlichungstag der Anmeldung: 07.05.2014
(73) Patentinhaber: Magna Steyr Fahrzeugtechnik AG & Co KG, 8041 Graz (AT)
(72) Erfinder: BARTLOK, Guido, 8010 Graz (AT); MAYR, Franz, 8323 St. Marein bei Graz (AT)
(74) Vertreter: Zangger, Bernd

(56) Entgegenhaltungen:
- EP-A1- 1 653 148
- WO-A1-2009/006852
- WO-A1-2011/049466
- WO-A1-2011/138826
- DE-A1-102009 049 687
- JP-A- 2007 170 443

## Beschreibung

### Gebiet der Erfindung

Die vorliegende Erfindung betrifft ein Druckspeichersystem sowie Verfahren zum Betreiben eines derartigen Druckspeichersystems.

### Stand der Technik

Erfindungsgemäße Vorrichtungen können beispielsweise in Form von Tanks oder Tanksystemen von Kraftfahrzeugen eingesetzt werden, um bei einem Tank- oder Befüllvorgang ein Überfüllen einzelner Druckspeicherbehälter mit Kraftstoff zu verhindern. Nach dem Befüllvorgang muss der Kraftstoff zum Verbrauch wieder entnommen werden. Dafür sind unterschiedliche Anordnungen von Druckspeicherbehältern und Ventilen, sowie Verfahren zu deren Betrieb bekannt.

Speziell im Fall von mit Erdgas oder Wasserstoff betriebenen Kraftfahrzeugen wird einerseits eine große Reichweite gewünscht und steht andererseits oft nur begrenzter Raum zum Einbau der Druckspeicherbehälter zur Verfügung, sodass es häufig von Vorteil ist, mehrere Druckspeicherbehälter unterschiedlicher Kapazität an mehreren Stellen im Fahrzeug unterzubringen. Aber auch bei stationären Anlagen, insbesondere bei Arbeitsmaschinen wird eine lange Betriebsdauer gewünscht und es steht oft nur begrenzter Raum zur Verfügung.

Die DE 10 2009 049687 A1 beschreibt eine Gasbehälteranordnung für einen Gasmotor mit mehreren Gasbehältern und ein Verfahren zum Betreiben einer solchen Gasbehälteranordnung. Diese Gasbehälteranordnung für einen Gasmotor weist mehrere Gasbehälter, wobei jedem der mehreren Gasbehälter jeweils wenigstens eine Ventilvorrichtung zugeordnet ist; eine gemeinsamen Gasleitung, die einerseits mit den mehreren Gasbehältern und andererseits mit einem Befüllstutzen und mit dem Gasmotor verbunden ist, und eine Steuereinrichtung zum Ansteuern der Ventilvorrichtungen der mehreren Gasbehälter auf. Die Gasbehälter können wahlweise gleiche oder unterschiedliche Volumina aufweisen. Die Vorteile der in der DE 10 2009 049687 A1 beschriebenen Anordnung und Betriebsverfahren kommen aber insbesondere bei unterschiedlichen Gasbehältervolumina oder asymmetrischen Anordnungen der Gasbehälter und der Gasleitungen zur Geltung.

Die Gasbehälteranordnung der DE 10 2009 049687 A1 ist dadurch gekennzeichnet, dass eine Steuereinrichtung ausgebildet ist, um die Ventilvorrichtungen der mehreren Gasbehälter zumindest zeitweise derart anzusteuern, dass ein erster Gasbehälter und ein zweiter Gasbehälter miteinander verbunden sind, sodass zwischen dem ersten und dem zweiten Gasbehälter Gas zum Druckausgleich strömen kann. Bei dem in der DE 10 2009 049687 A1 ebenfalls beschriebenen Verfahren zum Betreiben einer Gasbehälteranordnung für einen Gasmotor mit mehreren Gasbehältern wird ein hoch verdichtetes Gas von mindestens einem Vorratstank gleichzeitig in die mehreren Gasbehälter gefördert. Während eines Betankungsvorganges der Gasbehälteranordnung werden die Ventilvorrichtungen eines ersten Gasbehälters und eines zweiten Gasbehälters zumindest zeitweise geöffnet, um den ersten und den zweiten Gasbehälter derart miteinander zu verbinden, dass zwischen dem ersten und dem zweiten Gasbehälter Gas zum Druckausgleich strömen kann.

Die beiden Gasbehälter sind über eine gemeinsame Gasleitung sowohl mit dem Gasmotor als auch mit einem Befüllstutzen verbunden. Dieser ist über einen entsprechenden Zapfschlauch verbindbar, um ein hoch verdichtetes Gas, wie zum Beispiel Erdgas aus einem oder mehreren Vorratsbehältern der Erdgasbetankungsanlage in die Gasbehälter der Gasbehälteranordnung zu füllen. Der Befüllstutzen ist mit einem Tankklappenschalter ausgestattet, der ein Öffnen und Schließen der Tankklappe des Befüllstutzens erfasst. Wahlweise kann der Tankklappenschalter auch zum Erkennen des Vorhandenseins einer Zapfpistole in dem geöffneten Befüllstutzen ausgebildet sein und eine elektronische Busverbindung über den Befüllschlauch ermöglicht die Kommunikation zwischen der Tankstelle und einer Steuereinrichtung im Fahrzeug.

Die DE 10 2009 049687 A1 steht stellvertretend für eine Anzahl von bekannten Systemen von kombinierten Druckspeicherbehältern und Ventilanordnungen, die das Befüllen und die Entnahme von Fluiden aus Druckspeichersystemen ermöglichen. Darüber hinaus ist eine Vielzahl von weiteren technischen Einrichtungen bekannt, die es ermöglichen, dass ein Fülldruck eines einzelnen Druckspeicherbehälters oder eines gesamten Druckspeichersystems durch Messung des Druckes und durch elektronische Steuerung elektromagnetischer Ventile kontrolliert und begrenzt werden kann.

Bei den genannten Anwendungen ist es erwünscht, dass ein zulässiger Betriebsdruck eines Druckspeicherbehälters oder eines Druckspeichersystems im Verlauf eines Befüllvorganges zuverlässig eingehalten und so höchste Betriebssicherheit gewährleistet wird. Der Befüllvorgang soll möglichst schnell und mit nur geringen Energieverlusten durchführbar sein. Verschleiß an Ventilkomponenten soll gering gehalten und Beschädigungen an Druckspeicherbehältern und Druckleitungen sollen verhindert werden. Außerdem ist es erwünscht die Verrohrung der Druckspeichersysteme zu vereinfachen und die Anzahl und Komplexität der Druckleitungen zu vermindern.

Druckspeicherbehälter für mobile Anwendungen werden je nach Anwendungsart in der Bauweise dem entsprechenden Druckniveau angepasst und gebaut. Dies bedingt Speicher, die in ihrer Festigkeit dem Betriebsdruck und den ECE-Richtlinien entsprechen und bei Hochdruckanlagen, z.B. oberhalb 200 bar, entsprechenden Platz benötigen. Kleine Druckspeicherbehälter mit jeweils gleichem zulässigem Betriebsdruck, oder modular zusammengesetzte Teildruckspeicher mit gleichem zulässigem Betriebsdruck bauen dadurch im Verhältnis sehr groß und teuer und haben sich daher bisher nicht durchgesetzt. Auch ist im Stand der Technik keine ausreichend zuverlässige technische Lösung bekannt, die das gleichzeitige Befüllen von Druckspeicherbehältern mit unterschiedlichem zulässigem Betriebsdruck an demselben Tankstutzen ermöglicht.

Nach derzeit geltenden gesetzlichen Bestimmungen müssen alle Druckspeicherbehälter eines Systems auf einen identen zulässigen Betriebsdruck (maximalen Arbeitsdruck) ausgelegt sein. Es ist derzeit auch verboten an Tankstellen zu tanken, deren Betankungsdruck (Zapfdruck) den maximalen Arbeitsdruck der in einem Kraftfahrzeug verbauten Druckspeicherbehälter übersteigt.

Es ist eine Aufgabe der Erfindung, Druckspeichersysteme in dieser Hinsicht zu verbessern und insbesondere kombinierte Ventilanordnungen anzugeben die, zum Teil auch ohne elektrische und elektronische Komponenten, die Sicherheit von Systemen von Druckspeicherbehältern mit unterschiedlichem zulässigem Betriebsdruck gewährleisten.

Es ist außerdem eine Aufgabe der Erfindung verbesserte Verfahren zum Betreiben von Druckspeichersystemen anzugeben, die eine erhöhte Betriebssicherheit ermöglichen.

### Zusammenfassung der Erfindung

Die Lösung der Aufgaben erfolgt durch ein Verfahren zum Betreiben eines Druckspeichersystems, wobei zumindest zwei einen unterschiedlichen zulässigen Betriebsdruck aufweisende Druckspeicherbehälter, wobei zumindest ein Druckspeicherbehälter einen zulässigen Betriebsdruck aufweist, der niedriger ist als ein maximaler an einem Tankstutzen aufbringbarer Druck, und wobei der zumindest eine Druckspeicherbehälter mit einem niedrigeren zulässigen Betriebsdruck durch zumindest eine vorgeschaltete, einen durch den niedrigeren zulässigen Betriebsdruck festgelegten Sperrdruck aufweisende, Einrichtung gegen unzulässigen Druckanstieg geschützt wird, gleichzeitig und über denselben Tankstutzen befüllt werden.

Durch die kombinierte Anwendung von mechanisch betätigten Sperrventilen, Drucksperrventileinheiten, Rückschlagventilen und elektromagnetischen Ventilen zum Zu- und Abschalten können beliebige Niveaus von zulässigen Betriebsdrucken in unterschiedlichen Druckspeichersystemen oder Teilen von Druckspeichersystemen umgesetzt werden, sodass kleinere, aber auch dünnwandigere, billigere Speicher Anwendung finden können. Weiters wird dadurch die Verwendung von Freiformspeichern möglich, die zusätzlich zu den Hauptspeichern bestehende Hohlräume in und an einem Kraftfahrzeug oder einer Arbeitsmaschine nutzen und dadurch die Fahrzeugreichweite oder die Betriebsdauer erhöhen.

Die Lösung der Aufgabe erfolgt auch durch ein Druckspeichersystem, wobei das Druckspeichersystem einen Tankstutzen, zumindest zwei Druckspeicherbehälter, Druckleitungen und zumindest eine Entnahmestelle aufweist, wobei zumindest ein Druckspeicherbehälter einen zulässigen Betriebsdruck aufweist, der niedriger ist als ein maximaler an dem Tankstutzen aufbringbarer Druck, wobei den zumindest einen Druckspeicherbehälter mit einem niedrigeren zulässigen Betriebsdruck zumindest eine vorgeschaltete, einen durch den niedrigeren zulässigen Betriebsdruck festgelegten Sperrdruck aufweisende Einrichtung, gegen unzulässigen Druckanstieg schützt. Diese vorgeschaltete Einrichtung kann zum Beispiel als ein Sperrventil und/oder als Drucksperrventileinheit oder ein elektromagnetisch betätigbares Absperrventil im Zusammenwirken mit einer elektronischen Druckmesseinrichtung und einer Steuereinheit (300) oder auch eine Kombination aus den genannten vorschaltbaren Einrichtungen ausgebildet sein.

Durch die Anwendung von rein mechanisch einen festgelegten Sperrdruck überwachenden Einrichtungen, wobei diese Einrichtungen dauerhaft mit einzelnen Druckspeicherbehältern und/oder Teilbereichen eines Druckspeichersystems wirkverbunden sind, ergibt sich eine hohe Sicherheit gegen Fehlbetankung und wirksamer Schutz gegen unzulässigen Druckanstieg in einzelnen Druckspeicherbehältern. Rein elektronisch überwachende Systeme können durch fehlerhafte Druckmessungen und/oder Schaltvorgänge an elektromagnetischen Ventilen gefährliche Zustände im Druckspeichersystem herbeiführen. Mechanische und elektrische/elektronische Komponenten werden in erfindungsgemäßen Druckspeichersystemen bevorzugt gemeinsam als zusätzliche Sicherungseinrichtungen eingesetzt.

Gemäß einem Aspekt der Erfindung wird die Aufgabe gelöst durch ein Verfahren zum Betreiben eines Druckspeichersystems, wobei zumindest zwei einen unterschiedlichen zulässigen Betriebsdruck aufweisende Druckspeicherbehälter gleichzeitig und über denselben Tankstutzen befüllt werden.

Bevorzugt weist dieser eine Tankstutzen mechanische Dimensionen und/oder andere Kodierungen auf, sodass der Tankstutzen mit allen Zapfeinrichtungen verbindbar ist die Kraftstoff/Medium bis zu einem höchsten an Tankstellen oder anderen Betankungseinrichtungen verfügbaren Zapfdruck (in Zukunft beispielsweise 700 oder 900 Bar) zur Verfügung stellen. Die dem Tankstutzen nachgeschaltete und dem Druckspeichersystem vorgeschaltete Einrichtung (z.B. Sperrventil/Drucksperrventileinheit) schützt Druckspeicherbehälter mit einem niedrigeren zulässigen Betriebsdruck gegen unzulässigen Druckanstieg.

Gemäß einem weiteren Aspekt der Erfindung wird die Aufgabe gelöst durch ein Verfahren zum Betreiben eines Druckspeichersystems, wobei zur Entnahme von Medium aus dem Druckspeichersystem die den Druckspeicherbehältern mit dem niedrigeren zulässigen Betriebsdruck vorgeschalteten Sperrventile und/oder Drucksperrventileinheiten abhängig von der Druckabnahme im Druckspeichersystem entsprechend dem für die jeweiligen Sperrventile und/oder Drucksperrventileinheiten festgelegten Sperrdruck selbsttätig öffnen.

Bei geeigneter Anordnung (siehe beispielhafte Figuren) von Sperrventilen und/oder Drucksperrventileinheiten kann ohne elektronische Druckmessung und Steuerung Medium/Kraftstoff aus Teilen des Druckspeichersystems mit unterschiedlichem zulässigem Betriebsdruck entnommen werden.

Weiterbildungen der Erfindung sind in den abhängigen Ansprüchen, der Beschreibung sowie den beigefügten Zeichnungen angegeben.

Eine bevorzugte, einen durch einen niedrigeren zulässigen Betriebsdruck festgelegten Sperrdruck aufweisende, vorgeschaltete Einrichtung ist beispielsweise ein Sperrventil für einen Druckspeicherbehälter für ein Medium, wobei ein Ventilgehäuse eine Ventilkammer mit einer Zulauföffnung und einer dem Druckspeicherbehälter zugewandten Auslassöffnung, einen beweglichen Kolben, und zumindest eine Feder aufweist, wobei der Kolben zumindest einen axialen Verbindungskanal aufweist und durch zumindest zwei in der Ventilkammer angeordnete Dichtelemente axial beweglich geführt ist, wobei eine einem Einlassbereich der Ventilkammer zugewandte erste Kolbenwirkfläche des Kolbens und ein Dichtkörper oder das Ventilgehäuse einen Ventilsitz bilden, und wobei durch Änderung des Druckes in einem an eine zweite Kolbenwirkfläche angrenzenden Speicherbereich der Ventilkammer der Kolben axial bewegbar ist und eine zwischen der Zulauföffnung und der Auslassöffnung angeordnete Durchlassöffnung reversibel verschlossen und geöffnet werden kann, wobei die Durchlassöffnung in drucklosem Zustand durch die Feder offen gehalten wird.

Es resultiert ein rein mechanisches Sperrventil, das aufgrund einer eingestellten Federkraft ab einem bestimmten Druck die Durchlassöffnung dicht verschließt und weder bei weiterer Druckzunahme oder Druckabnahme bis Unterdruck in der Zulauföffnung öffnet und somit immer verschlossen bleibt. Die Entnahme von Medium erfolgt an einer oder mehreren anderen Stellen im Druckspeichersystem.

Eine weitere bevorzugte, einen durch einen niedrigeren zulässigen Betriebsdruck festgelegten Sperrdruck aufweisende, vorgeschaltete Einrichtung ist beispielsweise eine Drucksperrventileinheit für einen Druckspeicherbehälter für ein Medium, wobei ein Ventilgehäuse eine Ventilkammer mit einer Zulauföffnung und einer dem Druckspeicherbehälter zugewandten Auslassöffnung, einen beweglichen Kolben, und zumindest eine Feder aufweist, wobei der Kolben zumindest einen axialen Verbindungskanal aufweist und durch zumindest zwei in der Ventilkammer angeordnete Dichtelemente axial beweglich geführt ist, wobei eine einem Einlassbereich der Ventilkammer zugewandte erste Kolbenwirkfläche des Kolbens und ein Dichtkörper oder das Ventilgehäuse einen Ventilsitz bilden, und wobei durch Änderung des Druckes in einem an eine zweite Kolbenwirkfläche angrenzenden Speicherbereich der Ventilkammer der Kolben axial bewegbar ist und eine zwischen der Zulauföffnung und der Auslassöffnung angeordnete Durchlassöffnung reversibel verschlossen und geöffnet werden kann, wobei die Durchlassöffnung in drucklosem Zustand durch die Feder offen gehalten wird und wobei der Speicherbereich der Ventilkammer über einen Entnahmekanal und ein Entnahmeventil mit dem Einlassbereich verbindbar angeordnet ist.

Es resultiert eine rein mechanische Drucksperrventileinheit, die aufgrund einer eingestellten Federkraft ab einem bestimmten Druck die Durchlassöffnung dicht verschließt und weder bei weiterer Druckzunahme oder Druckabnahme bis Unterdruck in der Zulauföffnung öffnet und somit immer verschlossen bleibt.

Die Entnahme von Medium aus dem Druckspeicherbehälter erfolgt über einen Entnahmekanal und ein Entnahmeventil das mit einem Einlassbereich verbindbar angeordnet ist, oder auch an einer oder mehreren anderen Stellen im Druckspeichersystem.

Der erfinderische Vorteil dieser mechanischen Drucksperrventileinheit liegt beim Befüllvorgang darin, dass ein nachgeschaltetes Druckspeichersystem nur den Druck erreicht der gewünscht ist und unabhängig vom Druck vor der Drucksperrventileinheit und ohne einen elektromagnetischen Aktuator die Drucksperrventileinheit immer sicher verschlossen bleibt und somit den Druck im nachgeschalteten Druckspeichersystem einerseits sicher hält und eine weitere Druckzunahme durch nachströmendes Medium nicht zulässt. Ein weiterer Vorteil dieser Ventilausführung liegt darin, dass zwar bei Undichtigkeiten am Dichtsitz zwischen Kolben und Dichtkörper oder Ventilgehäuse das nachgeschaltete Druckspeichersystem einer nicht gewünschten Druckerhöhung ausgesetzt sein kann, wobei mit Zunahme des Druckes auf der Auslassseite die Anpresskraft des Kolbens auf den Dichtkörper oder das Ventilgehäuse zunimmt und somit die Undichtigkeit wieder verringert wird.

Besonders vorteilhaft wirkt sich aus, dass die Durchlassöffnung in drucklosem Zustand durch die Kraft der Feder offen gehalten wird. So kann das Medium bis zur Schlussphase des Tankvorganges ungehindert in den Druckspeicherbehälter strömen und schädliche Vibrationen im Bereich der Ventilkammer werden vermieden.

Wenn der Druck in der Zulauföffnung unter den Druck im Speicherbereich abfällt, kann das Entnahmeventil geöffnet werden und es fließt Medium vom Speicherbereich durch den Entnahmekanal zur Zulauföffnung. Dadurch wird eine Entnahme von Medium aus dem nachgeschalteten Druckspeicherbehälter oder -system über die Zuleitung möglich. Das erleichtert die Verwendung von zusätzlichen Druckspeicherbehältern und vereinfacht die Verrohrung von Druckspeichersystemen erheblich. Vorzugsweise ist das Entnahmeventil der Drucksperrventileinheit als Kugel- oder Kegelventil ausgebildet und wird durch eine Stellfeder in einem drucklosen Zustand geschlossen gehalten, wobei die Stellfeder auf der dem Einlassbereich zugewandten Seite des Entnahmeventils angeordnet ist. Dadurch ist das Entnahmeventil durch die Stellfeder bei Überdruck in der Zulauföffnung und auch drucklos permanent verschlossen. Wenn der Druck in der Zulauföffnung unter den Druck im Speicherbereich abfällt, kann in Abhängigkeit von der Federkraft der Stellfeder das Entnahmeventil öffnen und es fließt Medium vom Speicherbereich durch den Entnahmekanal zurück zur Zulauföffnung.

In einer besonders bevorzugten Ausführungsform der Drucksperrventileinheit ist die Federkraft der Stellfeder über eine Feder-Fixierschraube einstellbar. Der große Vorteil dieser Anordnung liegt darin, dass durch die Einstellmöglichkeit der Federkraft das Entnahmeventil beliebig weit unter dem Sperrdruck der Drucksperrventileinheit wieder öffnet. Somit ist aber auch der Zeitpunkt und das Druckniveau im Speicherbereich der Ventilkammer, ab dem die Drucksperrventileinheit öffnet, einstellbar.

In einer weiteren besonders bevorzugten Ausführungsform der Drucksperrventileinheit ist die Feder-Fixierschraube koaxial mit der Stellfeder angeordnet und weist einen axialen Kanal auf der als Drossel ausgebildet ist. Dadurch ist eine gedämpfte Zuschaltung von Medium vom Speicherbereich der Ventilkammer durch die Drosselstelle im Kanal der Feder-Fixierschraube zur Zulauföffnung und somit ein langsamer Druckabbau im Speicherbereich möglich. Druckspitzen im Bereich der Zulauföffnung werden vermieden.

In einer bevorzugten Ausführung sind der Entnahmekanal und das Entnahmeventil im Ventilgehäuse integriert angeordnet. In einer weiteren bevorzugten Ausführungsform sind der Entnahmekanal und das Entnahmeventil im Kolben integriert angeordnet. Dadurch wird ein Platz sparender Aufbau ermöglicht und es werden sowohl die Herstellung und der Zusammenbau als auch die Montage der Drucksperrventileinheit in Druckspeichersystemen vereinfacht.

Vorzugsweise sind die erste Kolbenwirkfläche und der Dichtkörper oder das Ventilgehäuse des Sperrventils und/oder der Drucksperrventileinheit so ausgebildet, dass in einer Schließposition des Kolbens eine Dichtwirkung an einer Dichtkante im Bereich des äußeren Randes der ersten Kolbenwirkfläche auftritt.

Äußerer Rand bedeutet hier, von der Achse des Kolbens betrachtet, radial außen liegend. Der äußere Rand des Kolbens kann beispielsweise im Bereich der ersten Kolbenwirkfläche schräg gefast sein. Auch kann die erste Kolbenwirkfläche am äußeren Rand einen erhöhten Wulst aufweisen, um die Dichtwirkung in diesem Bereich zu lokalisieren.

Dadurch wird bei Überschreiten eines Sperrdrucks bzw. bei Anstieg des Druckes über den Sperrdruck auf den Kolben keine Kraft mehr gegen die Schließrichtung des Kolbens ausgeübt. Der Sperrdruck und das Schließverhalten der erfindungsgemäßen Sperrventile und/oder Drucksperrventileinheiten werden somit unabhängig vom Druck in der Zulauföffnung. Außerdem kann bei geschlossenem Ventil auch bei einem Druckanstieg in der Zulauföffnung durch den Druck in der Zulauföffnung keine axiale Kraft auf den Kolben ausgeübt werden und das Sperrventil und/oder die Drucksperrventileinheit bleibt auch bei extremen Druckstößen sicher geschlossen.

Es wird außerdem sichergestellt, dass das Sperrventil und/oder die Drucksperrventileinheit auch dann geschlossen bleibt, wenn der Druck in der Zulauföffnung unter den Sperrdruck absinkt, bei dem der Kolben zuvor geschlossen hat, da die nun fortwährende Schließkraft im Wesentlichen nur durch den Druck im Speicherbereich der Ventilkammer auf die Kolbenwirkfläche abzüglich der Federkraft der Feder bestimmt wird.

Dadurch, dass die Zulauföffnung vorzugsweise radial außerhalb der Kolbenwirkfläche in den Einlassbereich der Ventilkammer mündet, wird zusätzlich sichergestellt, dass durch den Druck in der Zulauföffnung keine axiale Kraft auf den Kolben ausgeübt werden kann.

Vorzugsweise ist die zweite Kolbenwirkfläche grösser ausgebildet als die erste Kolbenwirkfläche. Durch eine relativ größere zweite Kolbenwirkfläche ist es möglich kleinere Werte für den Sperrdruck der Sperrventile und/oder Drucksperrventileinheiten zu realisieren.

Besonders bevorzugt ist der Kolben zylindrisch und weist an seiner Außenseite Gleitflächen in zumindest zwei Bereichen mit vorzugsweise unterschiedlichen Durchmessern auf.

Besonders bevorzugt sind die zumindest zwei Dichtelemente in entsprechenden Ausnehmungen im Ventilgehäuse angeordnet. Die kostengünstigste Variante wäre, die Dichtelemente in jeweils einer Nut im Kolben unterzubringen. In Nuten auf dem Kolben angeordnete Dichtelemente erweisen sich bei sehr hohen Drucken (200 bis 1000 bar) als problematisch. In Abhängigkeit des Druckes wird eine variable Kraft auf den Kolben ausgeübt und beeinflusst daher den Sperrdruck der Sperrventile und/oder Drucksperrventileinheiten. Durch die vorzugsweise Anordnung der Dichtungen in Ausnehmungen oder Nuten im Ventilgehäuse, insbesondere in zylindrischen Abschnitten der Ventilkammer erfolgt keine variable Krafteinwirkung auf den Kolben durch den Druck des Mediums - das Sperrventil und/oder die Drucksperrventileinheit bleiben zuverlässig geschlossen.

Der Dichtkörper und/oder der Kolben sind vorzugsweise aus einem elastisch verformbaren Material hergestellt. Durch eine den sehr hohen Drucken (200 bis 1000 bar) angepasste Materialwahl wird die Dichtwirkung optimiert und Verschleiß am Ventilsitz vermieden. Besonders geeignete Materialien umfassen Kunststoffe wie PEEK und PAS oder keramische Werkstoffe wie Aluminiumoxid und Siliziumcarbid, aber auch Spezialstähle und andere Metalle. Die Sperrventile und/oder Drucksperrventileinheiten müssen keinen separaten Dichtkörper aufweisen. Möglich ist auch, dass der Kolben direkt gegen das Ventilgehäuse dichtet. Bevorzugte Materialkombinationen sind dem Fachmann geläufig.

Ein zwischen dem Einlassbereich und dem Speicherbereich der Ventilkammer angeordneter Entlastungsbereich der Ventilkammer weist vorzugsweise zwischen den zumindest zwei Dichtelementen eine Entlastungsöffnung auf. Dadurch kann bei Undichtigkeiten an einem der Dichtelemente austretendes Medium nicht zu einer Druckerhöhung im jeweils anderen Bereich der Ventilkammer führen.

Gemäß einer besonders bevorzugten Ausführungsform der Erfindung ist die Entlastungsöffnung mit einer Leitung zur Entsorgung von austretendem Medium verbunden. Dadurch kann gegebenenfalls austretendes (brennbares) Medium aus der unmittelbaren Umgebung der Sperrventile und/oder Drucksperrventileinheiten abtransportiert und an einer geeigneten Stelle ohne Gefahr für Personen bei niedrigem Druck weiterbehandelt werden.

In einer bevorzugten Ausführungsform ist der Sperrdruck der Sperrventile und/oder Drucksperrventileinheiten im Wesentlichen durch die Federkraft der Feder und die Kolbenwirkflächen bestimmt. Die Federkraft der Feder wird in Abstimmung mit den Kolbenwirkflächen so bemessen, dass bei ansteigendem Druck im Speicherbereich nach Überschreitung eines vorbestimmten Sperrdruckes der Sperrventile und/oder Drucksperrventileinheiten zuverlässig schließt und verschlossen bleibt. Die Reibung an den Dichtelementen spielt ebenfalls eine Rolle in der Bemessung der Federkraft.

In einer Ausführungsform ist die Federkraft der Feder über die Einschraubtiefe eines Deckels einstellbar. Dadurch können beispielsweise beim Zusammenbau Unterschiede in der Reibung zwischen Kolben und Dichtelementen, etwa bewirkt durch Fertigungstoleranzen, ausgeglichen werden.

In einer weiteren Ausführungsform der Sperrventile oder Drucksperrventileinheiten sind Distanzhalter am Deckel des Ventilgehäuses oder entsprechende Freistellungen an der zweiten Kolbenwirkfläche des Kolbens vorgesehen. Dadurch wird eine gute Druckverteilung auf die zweite Kolbenwirkfläche des Kolbens erreicht.

Günstig ist auch, wenn das Ventilgehäuse an dem die Auslassöffnung aufweisenden Ende zumindest teilweise in eine Öffnung des Druckspeicherbehälters hineinragt und so dauerhaft mit dem Druckspeicherbehälter verbunden ist. In dieser Ausführungsform ist das Sperrventil oder die Drucksperrventileinheit platzsparend und vor mechanischer Krafteinwirkung geschützt im Inneren eines Druckspeicherbehälters angeordnet. Alternativ dazu kann die Auslassöffnung über eine Druckleitung dauerhaft mit dem Druckspeicherbehälter verbunden sein. Dadurch wird die Einbaulage eines Sperrventils, beispielsweise in einem Tankstutzen, oder einer Drucksperrventileinheit weitgehend unabhängig von der Einbaulage des Druckspeicherbehälters.

In einer weiteren Ausführungsform der erfindungsgemäßen Sperrventile oder Drucksperrventileinheiten ist die Auslassöffnung über einen Ventilaufnahmeblock oder über einen zumindest ein zusätzliches Ventil aufweisenden Speicherventilblock mit dem Druckspeicherbehälter verbindbar angeordnet. Speicherventilblöcke sind im Stand der Technik bekannt und sind bauliche Einheiten, die mehrere Ventilfunktionen in einem kompakten Gehäuse vereinigen und fest mit einer Öffnung eines Druckspeicherbehälters verbindbar sind. Dadurch wird die zum Schutz vor Überfüllung dienende Sperrfunktion der Sperrventile und/oder Drucksperrventileinheiten modular und platzsparend um weitere Funktionen erweiterbar.

In einer weiteren bevorzugten Ausführungsform der Sperrventile oder Drucksperrventileinheiten ist zwischen dem Speicherbereich und dem Entlastungsbereich der Ventilkammer ein Überdruckventil angeordnet, dessen Öffnungsdruck über dem Sperrdruck des Sperrventils oder der Drucksperrventileinheit liegt. In einer weiteren Ausführungsform ist das Überdruckventil im Kolben integriert angeordnet. Dadurch wird die Betriebssicherheit des Druckspeichersystems erhöht. Da das Sperrventil oder die Drucksperrventileinheit ja verschlossen bleibt, würde ein zum Beispiel durch äußere Krafteinwirkung oder anderer äußerer Einflüsse bewirkter Druckanstieg, ähnlich wie zum Beispiel eine durch einen Brand verursachte Überhitzung des Mediums und ein damit verbundener Druckanstieg im Druckspeicherbehälter ohne ein derartiges Überdruckventil eine Zerstörung des Druckspeicherbehälters oder einzelner nachgeschalteter Komponenten bedeuten. Besonders bevorzugt ist eine Kombination von Sperrventil/Drucksperrventileinheit und Überdruckventil in einem gemeinsamen Ventilgehäuse.

Die erfindungsgemäßen Sperrventile und Drucksperrventileinheiten sind für unterschiedliche Medien wie Wasserstoff, Methan, Erdgas oder ein Gemisch aus Wasserstoff und Erdgas besonders geeignet. Durch entsprechende Modifikationen ist auch eine Verwendung mit Flüssig-Gas (LPG) und anderen flüssigen Medien möglich.

Unter Verwendung der erfindungsgemäßen Sperrventile und/oder Drucksperrventileinheiten, allein und auch in Kombination mit elektromagnetisch betätigbaren Absperrventilen, können mehrere Druckspeicherbehälter mit unterschiedlichem zulässigem Betriebsdruck derart verbunden werden, dass diejenigen Druckspeicherbehälter, die einen niedrigeren zulässigen Betriebsdruck aufweisen als ein üblicher oder für das ganze System vorgesehener (höherer) Fülldruck, ein auf den jeweiligen zulässigen Betriebsdruck des jeweiligen Druckspeicherbehälters abgestimmtes Sperrventil oder eine Drucksperrventileinheit vorgeschaltet haben, um den jeweiligen Druckspeicherbehälter vor Übertankung zu schützen.

Dies dient der Erhöhung der Sicherheit gegen Überfüllung beim Betanken und ermöglicht die Anwendung von zusätzlichen kostengünstigeren Druckspeicherbehältern mit niedrigeren zulässigen Druckniveaus. Dadurch wird es aber auch möglich, zu einem bestehenden System kostengünstig mit einem Zusatzsystem und höherem Druckniveau die Speicherkapazität eines vorhandenen Druckspeichersystems massiv zu erhöhen.

Bevorzugt ist das Druckspeichersystem so ausgeführt, dass zumindest ein Druckspeicherbehälter einen zulässigen Betriebsdruck aufweist, der niedriger ist, als der zulässige Betriebsdruck zumindest eines weiteren Druckspeicherbehälters im Druckspeichersystem. Druckspeicherbehälter mit niedrigerem zulässigem Betriebsdruck sind kostengünstiger als Druckspeicherbehälter mit einem höheren zulässigen Betriebsdruck.

In einer weiteren bevorzugten Ausführungsform weist ein Druckspeichersystem zumindest eine Drucksperrventileinheit auf, die ein Sperrventil, ein Rückschlagventil und ein Überdruckventil umfasst, wobei diese Ventile vorzugsweise in einem gemeinsamen Ventilgehäuse angeordnet sind. Dadurch wird ein besonders platzsparender Einbau des Druckspeichersystems, beispielsweise in einem Fahrzeug, ermöglicht.

In einer bevorzugten Ausgestaltung eines Druckspeichersystems sind zumindest ein Sperrventil und/oder zumindest eine Drucksperrventileinheit in Serie zueinander angeordnet. In einer weiteren bevorzugten Ausgestaltung eines Druckspeichersystems sind zumindest ein Sperrventil und/oder zumindest eine Drucksperrventileinheit parallel zueinander angeordnet. Beide Ausgestaltungen ermöglichen in Verbindung mit verzweigten Druckleitungen den modularen Aufbau von weitläufigen Druckspeichersystemen.

In einer anderen bevorzugten Ausgestaltung eines Druckspeichersystems schützen zumindest ein Sperrventil und/oder zumindest eine Drucksperrventileinheit einen nachgeschalteten Teilbereich des Druckspeichersystems mit zumindest zwei Druckspeicherbehältern, wobei diese zumindest zwei Druckspeicherbehälter zueinander parallel und/oder in Serie angeordnet sind, gegen unzulässigen Druckanstieg. "In Serie angeordnet" bedeutet hier, dass Medium beim Befüllen oder der Entnahme von einem Druckspeicherbehälter sequenziell durch einen oder mehrere weitere Druckspeicherbehälter strömt. Auch diese Ausgestaltungen ermöglichen in Verbindung mit verzweigten Druckleitungen den modularen Aufbau von weitläufigen Druckspeichersystemen.

In einer weiteren bevorzugten Ausgestaltung eines Druckspeichersystems ist zumindest einem Druckspeicherbehälter zumindest ein von einer Steuereinheit steuerbares elektromagnetisch betätigbares Absperrventil zugeordnet. Das elektromagnetisch betätigbare Absperrventil ist besonders bevorzugt als automatisches Zylinderventil (AZV) ausgebildet.

Ein automatisches Zylinderventil ist ein elektrisch (meist mittels Magnet) angesteuertes Ventil, das geöffnet und geschlossen werden kann. Oft wird es in derartigen Druckspeichersystemen mit "shut-off-valve" oder Gasdrucksperrventil bezeichnet. Elektromagnetisch betätigbare Absperrventile in Ventilanordnungen dienen allgemein dem Öffnen und Schließen von Druckspeicherbehältern. Sie sind üblicherweise so konzipiert, dass sie im stromlosen Zustand ihres Stellmechanismus geschlossen sind. Der hier verwendete Begriff (AZV - automatisches Zylinderventil) kommt aus einer ECE-Richtlinie, welche diesen Begriff für ein derartiges Ventil verwendet. Das AZV kann einen nachgeschalteten Druckspeicherbehälter unabhängig vom anliegenden Druck sperren/öffnen und gewährleistet zusätzliche Sicherheit im Betrieb von Druckspeichersystemen.

Bevorzugt ist in Druckspeichersystemen zumindest eine Drucksperrventileinheit (DSV) zwischen zumindest einem elektromagnetisch betätigbare Absperrventil und einem, dem zumindest einen elektromagnetisch betätigbarenAbsperrventil zugeordneten, Druckspeicherbehälter angeordnet. Auch hier ist das elektromagnetisch betätigbare Absperrventil besonders bevorzugt als automatisches Zylinderventil (AZV) ausgebildet. Das AZV erlaubt die selektive Zu- und Abschaltung des der Drucksperrventileinheit nachgeschalteten Druckspeicherbehälters und gewährleistet zusätzliche Sicherheit. Die direkte Aneinanderreihung von DSV und AZV ohne dazwischen angeordnete Druckleitungen ermöglicht einen platzsparenden Aufbau.

In einer weiteren Ausführungsform ist zumindest eine elektronische Druckmesseinrichtung an zumindest einer Stelle im Druckspeichersystem, zwischen Tankstutzen und Entnahmestelle angeordnet, wobei die zumindest eine elektronische Druckmesseinrichtung über eine elektrische Meßleitung mit einer Steuereinheit funktionswirksam verbunden ist. Die Druckmessung mit einer elektronischen Druckmesseinrichtung, insbesondere mit einem Hochdrucksensor, ermöglicht die Verwendung eines (einfacheren) Sperrventils anstelle einer Drucksperrventileinheit und liefert neben Messwerten für den aktuellen Druck an verschiedenen Stellen im Druckspeichersystem zudem Messdaten für die übergeordnete Steuerung des gesamten Systems (beispielsweise Fahrzeug oder Arbeitsmaschine).

Ein "Betankungsvorgang" von mehreren Druckspeicherbehältern umfasst insbesondere den Zeitraum, in dem das hoch verdichtete Gas in die Druckspeicherbehälter gefördert wird. Das "gleichzeitige Betanken", zum Beispiel an einer Zapfsäule einer Erdgasbetankungsanlage (Tankstelle), von mehreren Druckspeicherbehältern steht im Gegensatz zu einem sequentiellen Betanken der Druckspeicherbehälter. So erfolgt das Betanken der mehreren Druckspeicherbehälter über parallele Zuleitungen, die mit einem gemeinsamen Befüll-/Tankstutzen gekoppelt sind, sodass das hoch verdichtete Gas gleichzeitig/parallel den mehreren Druckspeicherbehältern zugeführt werden kann und beim jeweiligen Erreichen des zulässigen Betriebsdrucks eines mit einem SV oder DSV gesicherten Druckspeicherbehälters dieser Leitungszweig gesperrt wird.

### Kurzbeschreibung der Zeichnungen

Die Erfindung wird im Folgenden beispielhaft unter Bezugnahme auf die Zeichnungen beschrieben.
- Fig. 1: zeigt ein Schaltungsschema für unterschiedliche Druckniveaus in Haupt- und Nebenspeichern.
- Fig. 2: zeigt eine Serienschaltung von Sperrventilen mit unterschiedlichem Sperrdruck zur Druckbegrenzung in Nebenspeichern.
- Fig. 3: zeigt eine Serienschaltung von Sperrventilen mit unterschiedlichem Sperrdruck zur Druckbegrenzung eines Druckspeichersystems mit Haupt- und Nebenspeichern und Integration eines Sperrventiles in eine Tankstutzeneinheit.
- Fig. 4: zeigt eine Parallelschaltung von Drucksperrventileinheiten zum Schutz diverser Teilspeicher.
- Fig. 5: zeigt ein Druckspeichersystem mit einem Sperrventil SV in einer Anwendung mit paralleler Anordnung zweier Druckspeicherbehälter S und Positionierung des Sperrventils SV vor einem Speicherventilblock.
- Fig. 6: zeigt ein Druckspeichersystem mit einer Drucksperrventileinheit DSV in einer Anwendung mit paralleler Anordnung zweier Druckspeicherbehälter S mit unterschiedlichem zulässigem Betriebsdruck.
- Fig. 7: ist eine schematische Darstellung einer weiteren Vorrichtung zum Betanken eines Kraftfahrzeugs an einer Tankstelle mit 700 bar Zapfdruck, beinhaltend ein Druckspeichersystem mit zwei Druckbehältern mit unterschiedlichem zulässigem Betriebsdruck.
- Fig. 8: ist eine Schnittansicht einer Ausführungsform eines erfindungsgemäßen Sperrventils SV.
- Fig. 9: ist eine Schnittansicht einer erfindungsgemäßen Drucksperrventileinheit DSV, die ein Sperrventil gemäß Fig. 8 mit zusätzlichen eingebauten Ventilen zeigt.

### Detaillierte Beschreibung der Erfindung

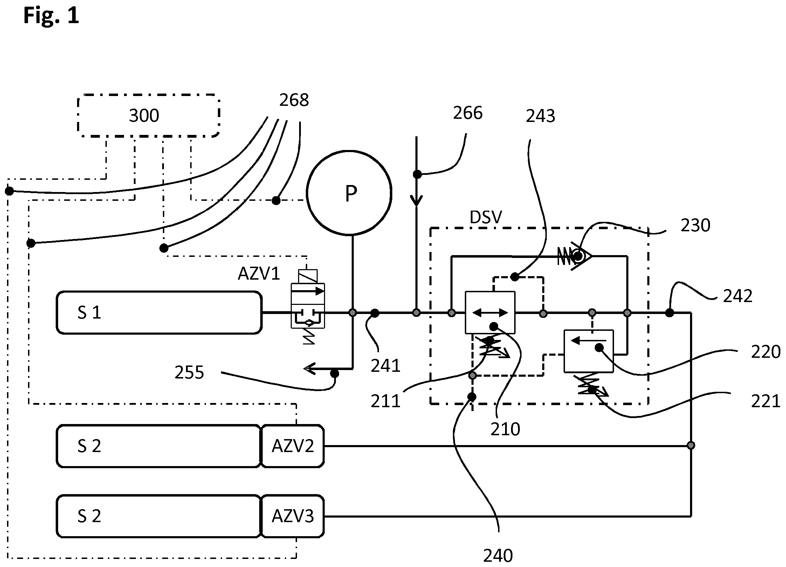

Figur 1 zeigt beispielhaft ein Schaltungsschema für unterschiedliche Druckniveaus in Haupt- und Nebenspeichern. Das System umfasst einen Hauptspeicher S1 mit einem höheren zulässigen Betriebsdruck mit automatischem Zylinderventil AZV1 und zwei Nebenspeicher S2 mit gleichem zulässigem Betriebsdruck und automatischen Zylinderventilen AZV2 und AZV3, deren zulässiger Betriebsdruck unterhalb des zulässigen Betriebsdrucks des Hauptspeichers liegt.

Die Ausgangslage beim Betanken des Systems ist so, dass das Drucksperrventil 210 in der Drucksperrventileinheit DSV mit einer gewünscht eingestellten Federkraft 211 in Durchflussrichtung offen ist und somit das Medium zum nachfolgenden Druckspeichersystem fließen kann. An den Druckspeicherbehältern werden AZV verwendet, die zum Druckspeicherbehälter hin über einen internen Bypass verfügen der ein Betanken zulässt, aber stromlos keine Entnahme aus dem Druckspeicherbehälter erlaubt. Beim Erreichen eines definierten Druckes in der Steuerleitung 243, schließt das Sperrventil den Zustrom aus der Druckleitung 241 entgegen der eingestellten Federkraft 211. Die Betankung des Hauptspeichers S1 wird weiter fortgesetzt. Die Drucküberwachung erfolgt über einen Drucksensor P und eine Steuereinheit 300. In der Druckleitung 241 kann ein wesentlich höherer Druck vorherrschen als in der Leitung 242 und in den Nebenspeichern S2. Parallel zum Strömungskanal im Sperrventil ist ein federbelastetes Rückschlagventil 230 angeordnet, das aufgrund der Federkraft in der Ausgangslage und somit beim Betanken permanent geschlossen ist.

Für die Entnahme des gespeicherten Mediums wird das AZV1 elektrisch geöffnet und Medium kann in die Entnahmeleitung strömen. Wenn der Druck im Hauptspeicher S1 durch Entnahme von Medium unter das Druckniveau der Nebenspeicher abfällt, öffnet das Rückschlagventil 230. Sobald in der Leitung 242 der Druck unter den eingestellten Wert entsprechend der Federkraft 211 abfällt, öffnet auch das Sperrventil und gibt die Verbindung zur Leitung 241 wieder frei. Durch Messung des Druckniveaus im Hauptspeicher S1 durch den Drucksensor P wird bzw. kann das AZV2 und/oder AZV3 elektrisch geöffnet werden und somit fließt Medium aus dem Nebenspeicher S2 zur Entnahme.

Um bei Undichtigkeiten im Sperrventil 210 oder im Entnahmeventil 230 keine unzulässige Druckerhöhung zu bekommen, wird in die Leitung 242 ein Überdruckventil 220 integriert, sodass dieses ab einem Druck entsprechend der eingestellten Federkraft 221 öffnet und die Verbindung zu einer Entlastungsleitung 240 freigibt. Somit wird der Druckspeicherbehälter S2 gegen eine Zunahme des Druckes über den zulässigen Betriebsdruck geschützt.

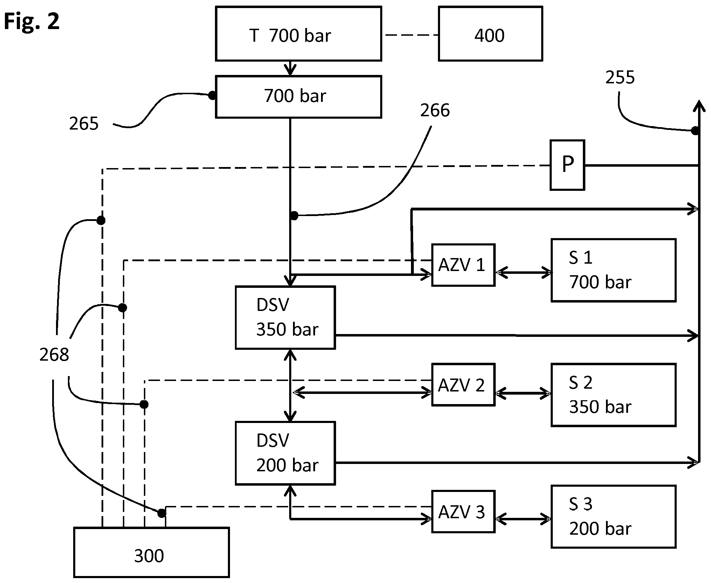

In der Figur 2 wird eine Serienschaltung von Drucksperrventileinheiten DSV mit unterschiedlichem Sperrdruck zur Druckbegrenzung in Nebenspeichern gezeigt. Die Steuerung wird derart dargestellt, dass beim Betanken ab einem beispielhaft erreichten Systemdruck von 200 bar die Drucksperrventileinheit DSV (Sperrdruck 200 bar) mechanisch schließt und der nachgeschaltete Nebenspeicher S3 (zulässiger Betriebsdruck 200 bar) mit dem automatischen Zylinderventil AZV keiner weiteren Druckerhöhung ausgesetzt wird. Beim Erreichen von beispielhaften 350 bar im restlichen Druckspeichersystem schließt die zweite Drucksperrventileinheit DSV (Sperrdruck 350 bar) und schützt den nachgeschalteten Nebenspeicher S2 (zulässiger Betriebsdruck 350 bar) und das DSV (Sperrdruck 200 bar) vor einer weiteren Druckzunahme. Der Hauptspeicher S1 (beispielhafter zulässiger Betriebsdruck 700 bar) wird bis zum Abschalten durch das Messsystem der Tankstelle 400 und/oder durch ein Signal des Drucksensors P befüllt.

Entsprechend der ECE-Richtlinie R110 sind die automatischen Zylinderventile AZV1 bis 3 beim Betanken stromlos geschlossen und die Speicher werden über einen Bypass (mit Rückschlagventil das nur in Strömungsrichtung zum Druckspeicherbehälter öffnet) befüllt. Bei Inbetriebnahme des Fahrzeugs wird nur das AZV1 elektrisch geöffnet und eine Gasentnahme 255 über einen Druckregler in Richtung Niederdruck ermöglicht. Sinkt der Druck im Hauptspeicher auf die beispielhaften 350 bar, öffnet aufgrund der Druckverhältnisse das mechanische DSV (Sperrdruck 350 bar). Zusätzlich wird über den Drucksensor P der Druck gemessen, die mögliche Systemfreigabe für den Druckspeicherbehälter S2 erkannt und über die Steuereinheit 300 das AZV2 elektrisch betätigt und geöffnet. Es wird somit Gas aus den Druckspeicherbehältern S1 und/oder S2 entnommen. Bei einer weiteren Abnahme des Druckes unter die beispielhaften 200 bar öffnet das mechanische DSV (Sperrdruck 200 bar) und elektrisch betätigt das AZV 3 und es kann aus allen Druckspeicherbehältern das gespeicherte Medium entnommen werden. Wobei die AZV auch einzeln geschaltet werden können. Nur bei einem erhöhten Bedarf an gespeichertem Medium werden weitere Druckspeicherbehälter zugeschaltet.

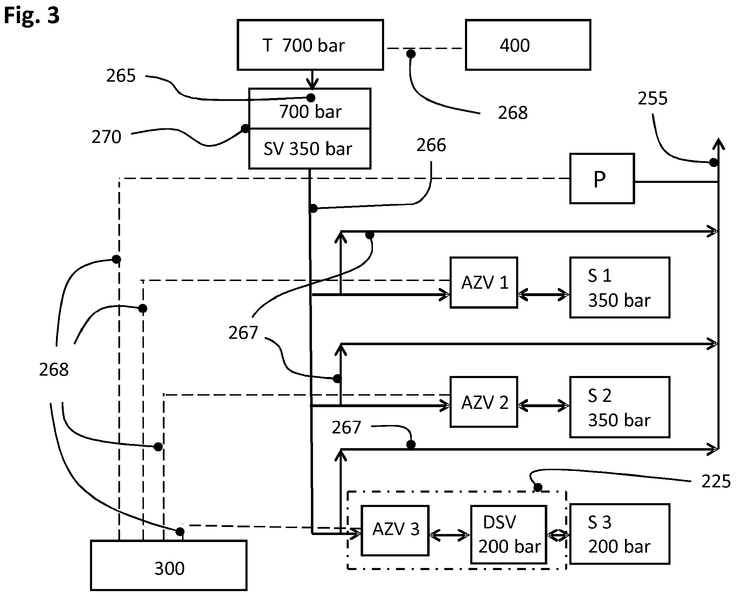

Figur 3 zeigt eine Serienschaltung von unterschiedlichen Sperrventilen zur Druckbegrenzung eines Druckspeichersystems mit Haupt- und Nebenspeichern und Integration eines Sperrventiles in eine Tankstutzeneinheit 270. Durch die Integration eines Sperrventiles mit einem Tankstutzen 265 in eine Tankstutzeneinheit 270 kann das Gesamtsystem gegen Übertanken geschützt und genau auf den zulässigen Betriebsdruck des gesamten Druckspeichersystems betankt werden, wobei im System zusätzlich noch Sperrventile zur weiteren Reduzierung des maximal möglichen Druckes für einzelne Teilspeicher angebracht sind.

In diesem Beispiel ist eine Drucksperrventileinheit DSV (Sperrdruck 200 bar) zwischen dem automatischen Zylinderventil AZV3 und dem Nebenspeicher S3 (zulässiger Betriebsdruck 200 bar) integriert in einen Speicherventilblock 225. Dies bringt den Vorteil, dass beim Betanken zwischen AZV3 und DSV (Sperrdruck 200 bar) der maximale Betankungsdruck solange bestehen bleibt, bis das AZV3 elektrisch zugeschaltet wird und öffnet. Erst dann wird bei Unterschreitung des eingestellten Druckes auch ein Öffnen des DSV 200 bar ermöglicht.

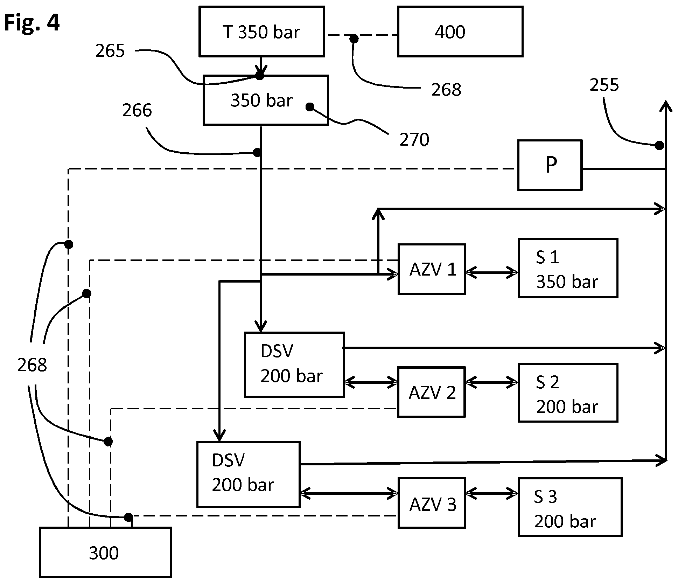

Die in der in Figur 4 gezeigte Parallelschaltung von Drucksperrventileinheiten zum Schutz diverser Teilspeicher entspricht weitgehend dem Beispiel in Figur 1, weist aber eine parallele Anordnung der beiden separaten Drucksperrventileinheiten DSV und Druckspeicherbehälter S2,S3 auf. Der Tankstutzen 265 ist für Betankung an einer Tankstelle T mit 350 bar Zapfdruck ausgeführt.

Durch die Möglichkeit unterschiedlicher Druckniveaus in Druckspeichersystemen wird der Einsatz von unterschiedlichen Tankformen und Druckspeicherbehältertypen ermöglicht, was die Verwendung des kostengünstigsten Druckspeicherbehälters entsprechend dem jeweiligen Druckniveau erlaubt.

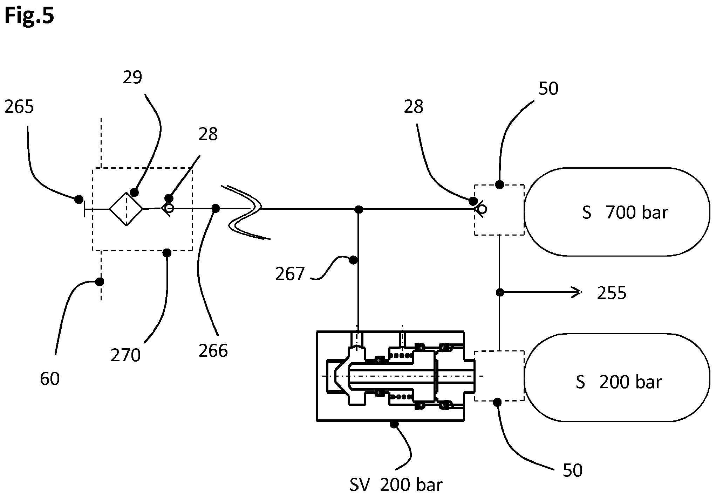

Figur 5 zeigt beispielhaft ein Druckspeichersystem mit einem Sperrventil SV in einer Anwendung mit paralleler Anordnung zweier Druckspeicherbehälter S und Positionierung des Sperrventils SV vor einem Speicherventilblock 50. Die Tankstutzeneinheit 270 ist eingebaut in einer Karosserie 60 eines Kraftfahrzeugs und weist einen Tankstutzen 265 auf. Beim Befüllvorgang strömt das Medium durch ein Filter 29 und ein Rückschlagventil 28 in die verzweigte Druckleitung 266. Ein Zweig der Druckleitung 266 führt über einen ersten Speicherventilblock 50 mit eingebautem Rückschlagventil 28 in einen Druckspeicherbehälter S mit 700 bar zulässigem Fülldruck. Zur Entnahme von Medium weist der erste Speicherventilblock 50 zusätzlich einen Druckregler auf. Der andere Zweig führt in eine hier radial angeordnete Einlassöffnung 10 eines für 200 bar Sperrdruck ausgelegten Sperrventils SV. Von der Auslassöffnung 11 des Sperrventils SV gelangt Medium nunmehr mit einem maximalen Druck von 200 bar über einen zweiten Speicherventilblock 50, der ebenfalls einen Druckregler zur Entnahme von Medium aufweist, in einen für 200 bar zulässigen Fülldruck ausgelegten zweiten Druckspeicherbehälter S. Durch die Abstimmung des Sperrdrucks (200 bar) des Sperrventils SV auf den zulässigen Betriebsdruck des zweiten Druckspeicherbehälters S und die dauerhaft verbundene Anordnung der Komponenten im Kraftfahrzeug ist ein sicheres Betanken unabhängig vom Zapfdruck der Tankstelle gewährleistet. Außerdem kann dadurch aus jedem der beiden Druckspeicherbehälter S, trotz unterschiedlicher zulässiger Druckniveaus, unabhängig und gleichzeitig Medium bei Niederdruck zum Verbraucher geführt werden.

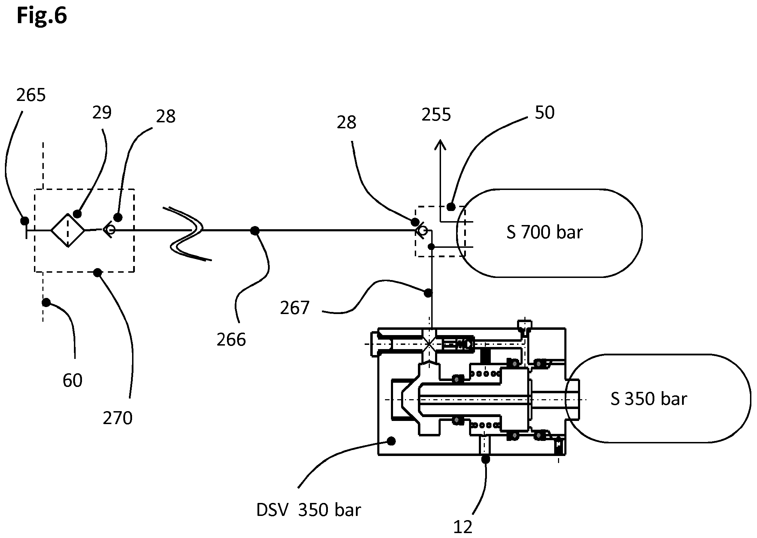

Figur 6 zeigt beispielhaft ein Druckspeichersystem, in dem die Druckleitung 266 von der Tankstutzeneinheit 270 ohne Verzweigung zu einem Speicherventilblock 50 eines ersten Druckspeicherbehälter S (700 bar zulässiger Betriebsdruck) führt. Vom einem Einlassbereich der Speicherventilblocks 50 führt eine weitere Druckleitung 267 zu einem untergeordneten zweiten Druckspeicherbehälter S (350 bar zulässiger Betriebsdruck) wobei die erfindungsgegenständliche Drucksperrventileinheit DSV mit integriertem Entnahmeventil das Druckspeichersystem absichert, indem die Drucksperrventileinheit DSV bei Erreichen der voreingestellten 350 bar Sperrdruck schließt.

Ein Öffnen der Drucksperrventileinheit DSV erfolgt erst, wenn der Druck im ersten Druckspeicherbehälter und somit auch in der Verbindungsleitung zwischen den Druckspeicherbehältern durch Entnahme von Medium unter den Sperrdruck (350 bar) der Drucksperrventileinheit DSV absinkt.

Die Entleerung des Druckspeichersystems erfolgt durch einen im Speicherventilblock 50 integrierten Druckregler und eine Druckleitung 255 zu einem Verbraucher.

Das in Fig. 6 gezeigte Druckspeichersystem weist eine sehr geringe Anzahl an separaten Komponenten und eine einfache Topologie der Druckleitungen auf.

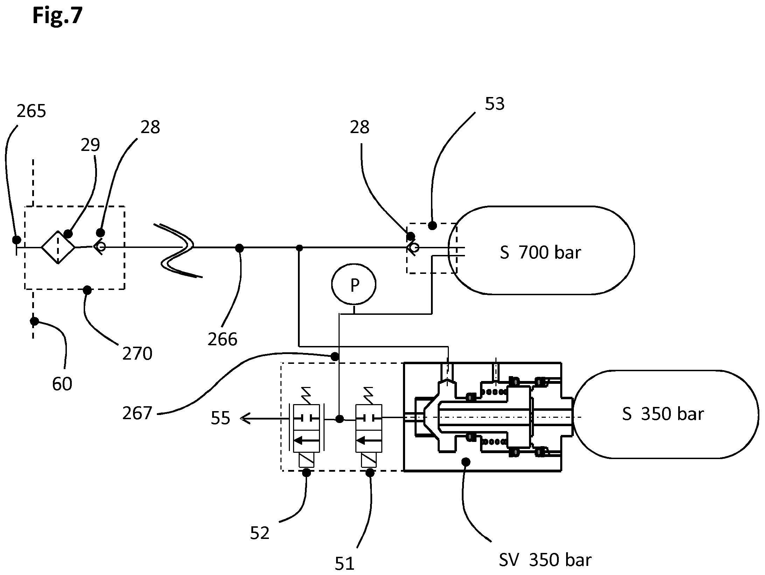

Figur 7·zeigt beispielhaft ein Druckspeichersystem umfassend eine Kombination eines Sperrventils SV mit elektromagnetisch betätigbaren Ventilen in einer Anwendung mit paralleler Anordnung zweier Druckspeicherbehälter S mit unterschiedlichen zulässigen Betriebsdrucken.

Die Tankstutzeneinheit 270 (entsprechend dem Stand der Technik) ist eingebaut in einer Karosserie 60 eines Kraftfahrzeugs und weist einen Tankstutzen 265 auf. Beim Befüllvorgang strömt das Medium durch ein Filter 29 und ein Rückschlagventil 28 in die verzweigte Druckleitung 266.

Ein Zweig der Druckleitung 266 führt über einen ersten Speicherventilblock 53 mit eingebautem Sicherheitsventil und Rückschlagventil 28 in den ersten Druckspeicherbehälter S mit 700 bar zulässigem Fülldruck. Zur Entnahme von Medium weist der erste Speicherventilblock 53 zusätzlich eine Druckleitung 267 auf, wobei die Druckleitung 267 als Entnahmeleitung zu einem Druckregler 52 führt.

Der andere Zweig der Druckleitung 266 führt in eine hier radial angeordnete Einlassöffnung 10 eines für 350 bar Sperrdruck ausgelegten Sperrventils SV das mit seiner Auslassöffnung 11 direkt mit einem zweiten Druckspeicherbehälter S mit 350 bar zulässigem Fülldruck verbunden ist. Das in Fig. 7 gezeigte Sperrventil SV weist im Bereich des Dichtkörpers zusätzlich eine Öffnung auf, die mit einem elektromagnetisch betätigbaren Absperrventil 51 verbunden ist. Das elektromagnetisch betätigbare Absperrventil 51 ist hier ein Magnetventil, das elektrisch geöffnet und geschlossen werden kann. Dem elektromagnetisch betätigbaren Absperrventil 51 nachgeschaltet ist ein Druckregler 52. In die Verbindungsleitung zwischen dem elektromagnetisch betätigbaren Absperrventil 51 und dem Druckregler 52 mündet die vom ersten Druckspeicherbehälter S kommende Verbindungsleitung. Diese Verbindungsleitung weist einen Drucksensor P auf. Das elektromagnetisch betätigbare Absperrventil 51 ermöglicht die Entnahme von Medium aus dem zweiten Druckspeicherbehälter S mit 350 bar zulässigem Fülldruck, sobald der Druck in der Verbindungsleitung unter den Sperrdruck des Sperrventils SV gesunken ist.

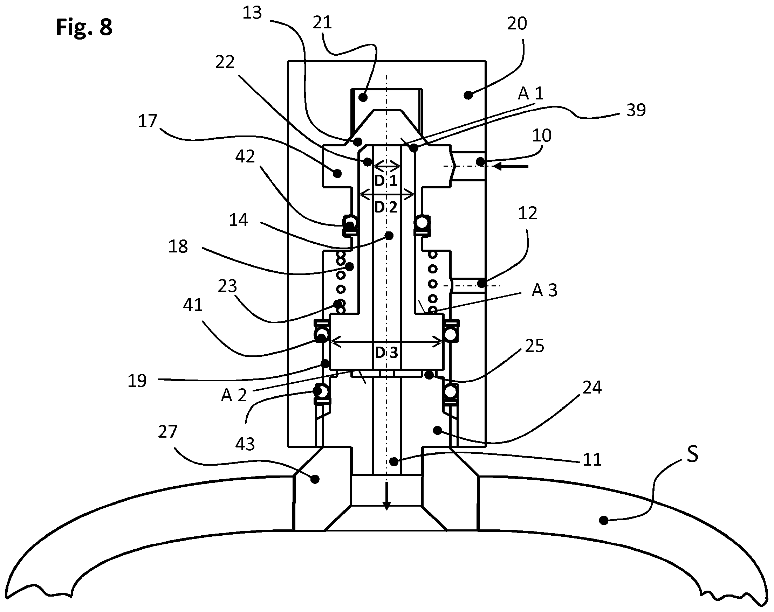

In der in Figur 8 gezeigten, beispielhaften Ausführungsform ist das Sperrventil erfindungsgemäß über einen Ventilaufnahmeblock 27 in einer Öffnung eines Druckspeicherbehälters S angeordnet. Als Sperrventil wird hier die Gesamtheit der den Befüllvorgang kontrollierenden Teile der erfindungsgemäßen Drucksperrventileinheit bezeichnet. In einem Ventilgehäuse 20 ist ein Kolben 22 montiert, der zwei Abschnitte mit unterschiedlichen Außendurchmessern D2, D3 und einen als zentrale Hohlbohrung ausgeführten Verbindungskanal 14 mit dem Innendurchmesser D1 aufweist. Der Kolben 22 stützt sich am Übergang zum größeren Außendurchmesser D3 über die Auflage A3 durch eine Feder 23 am Ventilgehäuse 20 ab, wodurch der Kolben 22 auf Anschlag zum Deckel 24 und dadurch in einem drucklosen Einbauzustand die Durchlassöffnung 13 in geöffneter Stellung gehalten wird.

Der zylindrische Kolben weist in der gezeigten Ausführungsform zwei Abschnitte mit unterschiedlichen Außendurchmessern D2 und D3 auf. Ein erster Kolbenabschnitt weist eine normal zur Achse des Kolbens 22 ausgebildete erste Kolbenwirkfläche A1, eine als Fase auf einer Kante des Kolbens ausgebildete Dichtkante und eine erste Gleitfläche mit einem Außendurchmesser D2 auf. Ein zweiter Kolbenabschnitt weist eine zweite Kolbenwirkfläche A2, eine Auflage A3 für die Feder 23 und eine zweite Gleitfläche mit einem Außendurchmesser D3 auf. Der Verbindungskanal 14 ist als axiale Bohrung über die gesamte Länge des Kolbens 22 ausgebildet und weist einen Innendurchmesser D1 auf. Der Verbindungskanal 14 verbindet die zwei Kolbenwirkflächen A1,A2 und wird entsprechend der Ausführungsform des Ventilgehäuses 20 und dem Betriebszustand des Sperrventils von Medium durchströmt.

Der Kolben 22 wird in den beiden Abschnitten mit unterschiedlichen Außendurchmessern D2,D3 von Dichtelementen 41,42 so abgedichtet, dass der Raum mit der Feder 23 zwischen diesen Dichtungen frei durch die Ventilationsöffnung 12 zum Atmosphärendruck atmen kann. Die Dichtelemente 41,42 können wahlweise im Kolben 22 oder wie dargestellt im Ventilgehäuse 20 montiert sein. Die Dichtung 43 dichtet den einstellbaren Deckel 24 gegen das Ventilgehäuse 20 ab.

Bei einem Befüllvorgang, zum Beispiel eines an der Auslassöffnung 11 angeordneten Druckspeicherbehälters, kann Medium durch die Zulauföffnung 10 im Einlassbereich 17 der Ventilkammer über die Durchlassöffnung 13 und durch den Verbindungskanal 14 in den Speicherbereich 19 der Ventilkammer, und in der Folge durch die Auslassöffnung 11 in den nachfolgenden Druckspeicherbehälter S gelangen. Wenn der Druck im gesamten Druckspeichersystem so weit ansteigt, dass aufgrund der Kraftverhältnisse durch den anliegenden Druck auf die Kolbenwirkflächen A2 und A1 der Kolben 22 die Federkraft 23 überwindet, wird der Kolben 22 gegen den Dichtkörper 21 geschoben. Das Sperrventil schließt. Dieser Druck entspricht dem Sperrdruck.

Um keine weitere Druckkraft auf den Kolben zu bekommen, ist es daher von Vorteil, wenn der Kolben am äußeren Durchmesser D2 zum Dichtkörper 21 abdichtet. Bei einem Druckanstieg im Einlassbereich 17 bleibt das Sperrventil weiterhin geschlossen, da auf die erste Kolbenwirkfläche A1 die Druckerhöhung nicht mehr wirkt. Wenn der Druck in der Einlassöffnung 10 unter den Druck absinkt bei dem der Kolben geschlossen hat, bleibt das Ventil trotzdem geschlossen, da die Schließkraft durch den Druck in der Auslassöffnung 11 auf die Kolbenwirkfläche A2, abzüglich der Federkraft der Feder 23, bestimmt wird und sich dieser Zustand nicht geändert hat. Somit ist es möglich, auf der Einlassseite 10 Unterdruck aufzubringen, ohne dass das Ventil dadurch öffnet. Die Federkraft der Feder 23 ist mit der Einschraubtiefe des Deckels 24 zusätzlich einstellbar. Um eine gute Druckverteilung auf die zweite Kolbenwirkfläche A2 zu erhalten sind entweder Distanzhalter 25 am Deckel 24 oder entsprechende Freistellungen am Kolben darzustellen.

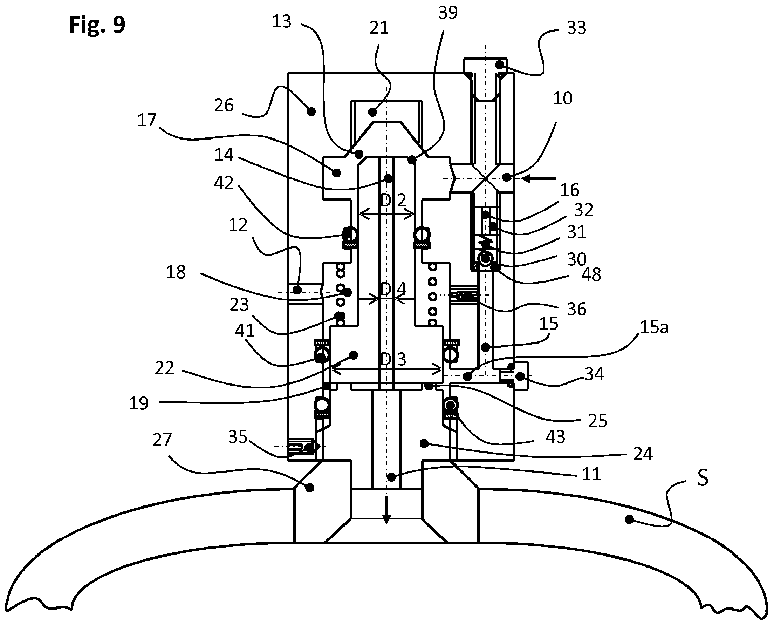

Figur 9 zeigt beispielhaft eine vollständige erfindungsgemäße Drucksperrventileinheit. Diese umfasst im Wesentlichen alle Teile des in Fig. 8 gezeigten Sperrventils mit gleichen Bezugszeichen. Das veränderte Ventilgehäuse wird hier mit der Bezugszahl 26 bezeichnet und weist einen beispielhaft zwischen dem Speicherbereich 19 und der Zulauföffnung 10 dargestellten Entnahmekanal 15 auf in dem ein Entnahmeventil 30 angeordnet ist, dass entsprechend den Druckverhältnissen öffnet und schließt. Eine vorteilhafte Ausführung ergibt sich in der Ausführung des Entnahmeventils 30 als mechanisches Kugelventil, wobei das Kugelventil durch eine Feder 31 drucklos permanent verschlossen ist. Wenn der Druck in der Zulauföffnung 10 unter den Druck im Speicherbereich 19 und somit im Entnahmekanal 15.15a abfällt, kann in Abhängigkeit von der Federkraft 31 das Entnahmeventil 30 öffnen und es fließt Medium vom Speicherbereich 19 durch den Entnahmekanal 15 und den Kanal 16 in der Feder-Fixierschraube 32 wieder zur Zulauföffnung 10 zurück. Erst dadurch wird eine Entnahme von Medium aus dem nachgeschalteten Druckspeichersystem möglich, vorausgesetzt das nachgeschaltete Druckspeichersystem weist keine weiteren Entnahmeeinrichtungen auf. In weiterer Folge baut sich der Druck im Speicherbereich 19 ab und abhängig von der Federhysterese der Feder 23 und der Reibung der Dichtelemente 41,42 wird der Kolben 22 vom Sperrventil zeitverzögert nach unten gedrückt und die Durchlassöffnung 13 freigegeben. Dadurch wird zusätzlich zum Strömen durch das Entnahmeventil 30 ein Rückströmen des Mediums vom Speicherbereich 19 durch den Verbindungskanal 14, der einen Durchmesser D4 aufweist, zur Zulauföffnung 10 ermöglicht. Dadurch wird wiederum ein Druckausgleich zwischen Speicherbereich 19 der Ventilkammer und Zulauföffnung 10 hergestellt und das Entnahmeventil 30 schließt wieder aufgrund der Federkraft der Stellfeder 31. Die Zulauf - und Rückflussmenge kann durch den Bohrungsdurchmesser D4 entsprechend den Anforderungen abgestimmt werden.

Die Dichtung 48 dichtet ein als Baugruppe eingeschraubtes Entnahmeventil 30 gegen den Ventilkörper 26. Das Entnahmeventil kann auch in Kombination mit elektromagnetischen Ventilen und einem Drucksensor P zur beliebigen Steuerung des Zeitpunktes für das Öffnen der Drucksperrventileinheit eingesetzt werden.

Die Sicherung des eingeschraubten Deckels 24 und somit die sichere Festlegung des Sperrdruckes kann wie technisch üblich z. B. mit einer Klemmschraube 35 erreicht werden. Notwendige Bohrungen können durch Schrauben mit Dichtringen 33 und 34, ebenfalls wie technisch üblich, nach außen abgedichtet werden.

Eine ideale Ergänzung ist eine Kombination von Drucksperrventileinheit mit einem Überdruckventil 36 in einem gemeinsamen Ventilgehäuse 26 zwischen der Leitung auf dem Entnahmekanal 15 und dem als Raum für die Feder 23 dienenden Entlastungsbereich 18 mit Entlastungsöffnung 12. Der sichere Abtransport von entweichendem Medium beseitigt jeden weiteren sicherheitskritischen Faktor.

Ein Öffnen des Sperrventiles erfolgt erst, wenn der Druck in der Auslassöffnung 11 dadurch absinkt, dass im nachfolgenden System über eine separate Stelle Medium entnommen wird und dadurch der Druck unter den Sperrdruck absinkt. Das Sperrventil öffnet entweder indem durch Entnahme aus dem Druckspeicherbehälter durch den Verbraucher der Druck im Speicherbereich 19 unter den Schließdruck des Sperrventils absinkt oder mittels des in Fig. 9 dargestellten im Entnahmekanal 15,15a angeordneten Entnahmeventils 30.

Eine weitere nicht in den Figuren dargestellte Variante eines erfindungsgemäßen Sperrventils SV variiert die in Fig. 8 dargestellte Ausführung. Die in der Fig. 8 im Deckel 24 angeordnete Auslassöffnung 11 wird in das Ventilgehäuse 20 fluchtend mit der Bewegungsachse des Kolbens 22 unter dem Dichtkörper 23 verlegt. Der Deckel 24 schließt die Ventilkammer nun ohne die Auslassöffnung dicht ab. Durch eine mit der neuen Auslassöffnung im Ventilgehäuse 20 fluchtende axiale Bohrung im Dichtkörper 23 kann Medium bei geöffnetem Ventilsitz durch die Durchlassöffnung 13 und die axiale Bohrung im Dichtkörper 23 und die neue mit der Bewegungsachse des Kolbens 22 fluchtende Auslassöffnung in einen mit dieser Auslassöffnung fest verbundenen Druckspeicherbehälter S strömen. Der ebenfalls mit der Bewegungsachse des Kolbens 22 fluchtende Verbindungskanal 14 ermöglicht die pneumatische oder hydraulische Kommunikation des Mediums mit der zweiten Kolbenwirkfläche A2 und bewirkt ein Schließen des Sperrventils bei Erreichen des vorgegebenen Sperrdrucks. Diese Bauvariante des erfindungsgemäßen Sperrventils kann besonders platzsparend ausgeführt werden. Sie eignet sich bei geeigneter Ausgestaltung eines Entnahmekanals und eines Entnahmeventils zur Ausbildung als Drucksperrventileinheit entsprechend Figur 9. Die erforderlichen Änderungen sind einem Fachmann geläufig.

Bei allen Ausführungsformen , in denen ein Dichtkörper 21 verwendet wird, muss der Dichtkörper 21 zum Ventilgehäuse 20 aus Sicherheitsgründen abgedichtet werden, damit keine zusätzlichen Kräfte entstehen und auf die Dichtkante des Kolbens 22 wirken können.

Die Erfindung ist sowohl für stationär betriebene Druckspeichersysteme als auch für Druckspeichersysteme in Fahrzeugen geeignet. Die Bezeichnung Fahrzeug umfasst in dieser Patentschrift beispielsweise Kraftfahrzeuge, Schienenfahrzeuge, sowie Wasser- und Luftfahrzeuge. Alle angegebenen Druckwerte sind beispielhaft und führen zu keiner Einschränkung der Erfindung und des Druckbereiches für den die Erfindung beansprucht wird.

### Bezugszeichenliste

- 10: Zulauföffnung
- 11: Auslassöffnung
- 12: Entlastungsöffnung
- 13: Durchlassöffnung
- 14: Verbindungskanal
- 15, 15a: Entnahmekanal
- 16: Kanal
- 17: Ventilkammer Einlassbereich
- 18: Ventilkammer Entlastungsbereich
- 19: Ventilkammer Speicherbereich
- 20: Ventilgehäuse
- 21: Dichtkörper
- 22: Kolben
- 23: Feder
- 24: Deckel
- 25: Distanzhalter
- 26: Ventilgehäuse
- 27: Ventilaufnahmeblock
- 28: Rückschlagventil
- 29: Filter
- 30: Entnahmeventil
- 31: Stellfeder
- 32: Feder-Fixierschraube
- 33,34: Verschlusselemente
- 35: Klemmschraube
- 36: Überdruckventil
- 39: Dichtkante
- 41,42,43: Dichtelemente
- 48: Dichtung

- 50: Speicherventilblock mit Druckregler
- 51: Elektromagnetisch betätigbares Absperrventil
- 52: Druckregler
- 53: Speicherventilblock mit Sicherheitsventil
- 55: Druckleitung zum Verbraucher
- 60: Kraftfahrzeugkarosserie
- 200: Drucksperrventileinheit (DSV)
- 210: Sperrventil
- 211: Federkraft der Feder
- 220: Überdruckventil
- 221: Federkraft
- 225: DSV kombiniert mit AZV
- 230: Entnahmeventil (z.B. federbelastetes Kugelventil)
- 240: Entlastungsleitung
- 241,242: Druckleitungen
- 243: Steuerleitung
- 255: Entnahmestelle
- 265: Tankstutzen
- 266,267: Druckleitungen
- 268: Elektrische Leitung
- 270: Tankstutzeneinheit
- 300: Steuereinheit
- 400: Messsystem Tankstelle

- A1,A2: Erste und Zweite Kolbenwirkflächen
- A3: Auflage
- D1,D4: Innendurchmesser Verbindungskanal
- D2,D3: Außendurchmesser Kolbenteilabschnitte
- DSV: Drucksperrventileinheit
- P: Drucksensor
- S,S1,S2,S3: Druckspeicherbehälter
- SV: Sperrventil
- T: Tankstelle (Zapfeinrichtung)
- AZV 1,AZV2,AZV3: Automatische Zylinderventile

## Patentansprüche

1. Verfahren zum Betreiben eines Druckspeichersystems,
**dadurch gekennzeichnet, dass** zumindest zwei einen unterschiedlichen zulässigen Betriebsdruck aufweisende Druckspeicherbehälter (S,S1,S2,S3), wobei zumindest ein Druckspeicherbehälter (S,S1,S2,S3) einen zulässigen Betriebsdruck aufweist, der niedriger ist als ein maximaler an einem Tankstutzen (265) aufbringbarer Druck, und wobei der zumindest eine Druckspeicherbehälter (S,S1,S2,S3) mit einem niedrigeren zulässigen Betriebsdruck durch zumindest eine vorgeschaltete, einen durch den niedrigeren zulässigen Betriebsdruck festgelegten Sperrdruck aufweisende, Einrichtung gegen unzulässigen Druckanstieg geschützt wird, gleichzeitig und über denselben Tankstutzen (265) befüllt werden.

2. Druckspeichersystem umfassend einen Tankstutzen (265), zumindest zwei Druckspeicherbehälter (S,S1,S2,S3), Druckleitungen (266,267) und zumindest eine Entnahmestelle (55,255),
**dadurch gekennzeichnet, dass** zumindest ein Druckspeicherbehälter (S,S1,S2,S3) einen zulässigen Betriebsdruck aufweist, der niedriger ist als ein maximaler an dem Tankstutzen (265) aufbringbarer Druck, wobei den zumindest einen Druckspeicherbehälter (S, S1,S2,S3) mit einem niedrigeren zulässigen Betriebsdruck zumindest eine vorgeschaltete, einen durch den niedrigeren zulässigen Betriebsdruck festgelegten Sperrdruck aufweisende Einrichtung, wobei die vorgeschaltete Einrichtung ein Sperrventil (SV,210) oder eine Drucksperrventileinheit (DSV,200) oder ein elektromagnetisch betätigbares Absperrventil im Zusammenwirken mit einer elektronischen Druckmesseinrichtung und einer Steuereinheit (300) oder auch eine Kombination aus den genannten vorschaltbaren Einrichtungen ist, gegen unzulässigen Druckanstieg schützt.

3. Druckspeichersystem nach Anspruch 2,
**dadurch gekennzeichnet, dass** zumindest ein Druckspeicherbehälter (S,S1,S2,S3) einen zulässigen Betriebsdruck aufweist, der niedriger ist, als der zulässige Betriebsdruck zumindest eines weiteren Druckspeicherbehälters (S,S1,S2,S3) im Druckspeichersystem.

4. Druckspeichersystem nach Anspruch 2 oder 3,
**dadurch gekennzeichnet, dass** das Sperrventil (SV,210) ein Ventilgehäuse (20) eine Ventilkammer mit einer Zulauföffnung (10) und einer dem Druckspeicherbehälter (S) zugewandten Auslassöffnung (11), einen beweglichen Kolben (22), und zumindest eine Feder (23) aufweist, wobei der Kolben (22) zumindest einen axialen Verbindungskanal (14) aufweist und durch zumindest zwei in der Ventilkammer angeordnete Dichtelemente (41,42) axial beweglich geführt ist, wobei eine einem Einlassbereich (17) der Ventilkammer zugewandte erste Kolbenwirkfläche (A1) des Kolbens (22) und ein Dichtkörper (21) oder das Ventilgehäuse (20) einen Ventilsitz bilden, und wobei durch Änderung des Druckes in einem an eine zweite Kolbenwirkfläche (A2) angrenzenden Speicherbereich (19) der Ventilkammer der Kolben (22) axial bewegbar ist und eine zwischen der Zulauföffnung (10) und der Auslassöffnung (11) angeordnete Durchlassöffnung (13) reversibel verschlossen und geöffnet werden kann, wobei die Durchlassöffnung (13) in drucklosem Zustand durch die Feder (23) offen gehalten wird.

5. Druckspeichersystem nach einem der Ansprüche 2 bis 4,
**dadurch gekennzeichnet, dass** die Drucksperrventileinheit (DSV,200) ein Ventilgehäuse (20) eine Ventilkammer mit einer Zulauföffnung (10) und einer dem Druckspeicherbehälter (S) zugewandten Auslassöffnung (11), einen beweglichen Kolben (22), und zumindest eine Feder (23) aufweist, wobei der Kolben (22) zumindest einen axialen Verbindungskanal (14) aufweist und durch zumindest zwei in der Ventilkammer angeordnete Dichtelemente (41,42) axial beweglich geführt ist, wobei eine einem Einlassbereich (17) der Ventilkammer zugewandte erste Kolbenwirkfläche (A1) des Kolbens (22) und der Dichtkörper (21) oder das Ventilgehäuse (20) einen Ventilsitz bilden, und wobei durch Änderung des Druckes in einem an eine zweite Kolbenwirkfläche (A2) angrenzenden Speicherbereich (19) der Ventilkammer der Kolben (22) axial bewegbar ist und eine zwischen der Zulauföffnung (10) und der Auslassöffnung (11) angeordnete Durchlassöffnung (13) reversibel verschlossen und geöffnet werden kann, wobei die Durchlassöffnung (13) in drucklosem Zustand durch die Feder (23) offen gehalten wird und wobei der Speicherbereich (19) der Ventilkammer über einen Entnahmekanal (15,15a) und ein Entnahmeventil (30) mit dem Einlassbereich (17) der Ventilkammer verbindbar angeordnet ist.

6. Druckspeichersystem nach einem der Ansprüche 2 bis 5,
**dadurch gekennzeichnet, dass** die erste Kolbenwirkfläche (A1) und der Dichtkörper (21) oder das Ventilgehäuse (20) des zumindest einen vorgeschalteten Sperrventils (SV,210) und/oder der zumindest einen vorgeschalteten Drucksperrventileinheit (DSV,200) so ausgebildet sind, dass in einer Schließposition des Kolbens (22) eine Dichtwirkung an einer Dichtkante (39) im Bereich des äußeren Randes der ersten Kolbenwirkfläche (A1) auftritt.

7. Druckspeichersystem nach einem der Ansprüche 2 bis 6,
**dadurch gekennzeichnet, dass** der Sperrdruck des zumindest einen vorgeschalteten Sperrventils (SV,210) und/oder der zumindest einen vorgeschalteten Drucksperrventileinheit (DSV,200) im Wesentlichen durch die Federkraft der Feder (23) und die Kolbenwirkflächen (A1, A2) bestimmt ist.

8. Druckspeichersystem nach einem der Ansprüche 2 bis 7,
**dadurch gekennzeichnet, dass** die Drucksperrventileinheit (DSV,200) ein Sperrventil (SV,210), ein Rückschlagventil (230) und ein Überdruckventil (220) umfasst, wobei diese Ventile vorzugsweise in einem gemeinsamen Ventilgehäuse angeordnet sind.

9. Druckspeichersystem nach einem der Ansprüche 2 bis 8,
**dadurch gekennzeichnet, dass** zumindest ein Sperrventil (SV,210) und/oder zumindest eine Drucksperrventileinheit (DSV,200) in Serie zueinander angeordnet sind.

10. Druckspeichersystem nach einem der Ansprüche 2 bis 9,
**dadurch gekennzeichnet, dass** zumindest ein Sperrventil (SV,210) und/oder zumindest eine Drucksperrventileinheit (DSV,200) parallel zueinander angeordnet sind.

11. Druckspeichersystem nach einem der Ansprüche 2 bis 10,
**dadurch gekennzeichnet, dass** ein Sperrventil (SV,210) und/oder eine Drucksperrventileinheit (DSV,200) einen nachgeschalteten Teilbereich des Druckspeichersystems mit zumindest zwei Druckspeicherbehältern (S,S1,S2,S3), wobei diese zumindest zwei Druckspeicherbehälter (S,S1,S2,S3) zueinander parallel und/oder in Serie angeordnet sind, gegen unzulässigen Druckanstieg schützen.

12. Druckspeichersystem nach einem der Ansprüche 2 bis 11,
**dadurch gekennzeichnet, dass** zumindest einem Druckspeicherbehälter (S,S1,S2,S3) zumindest ein von einer Steuereinheit (300) steuerbares elektromagnetisch betätigbares Absperrventil zugeordnet ist.

13. Druckspeichersystem nach einem der Ansprüche 2 bis 12,
**dadurch gekennzeichnet, dass** zumindest eine Drucksperrventileinheit (DSV,200) zwischen zumindest einem elektromagnetisch betätigbaren Absperrventil und einem, dem zumindest einen elektromagnetisch betätigbaren Absperrventil zugeordneten, Druckspeicherbehälter (S,S1,S2,S3) angeordnet ist.

14. Druckspeichersystem nach einem der Ansprüche 2 bis 13,
**dadurch gekennzeichnet, dass** zumindest eine elektronische Druckmesseinrichtung an zumindest einer Stelle im Druckspeichersystem, zwischen Tankstutzen (265) und Entnahmestelle (255) angeordnet ist, wobei die zumindest eine elektronische Druckmesseinrichtung funktionswirksam mit der Steuereinheit (300) verbunden ist.

## Claims

1. Method for operating a pressure storage system,
**characterized in that**
at least two pressure storage vessels (S, S1, S2, S3) that have a different admissible operating pressure, wherein at least one pressure storage vessel (S, S1, S2, S3) has an admissible operating pressure lower than a maximum pressure that can be applied at a tank neck (265), and wherein the at least one pressure storage vessel (S, S1, S2, S3) with a lower admissible operating pressure is protected against an inadmissible pressure rise by at least one upstream device that has a shut-off pressure defined by the lower admissible operating pressure, are filled simultaneously and via the same tank neck (265).

2. Pressure storage system comprising a tank neck (265), at least two pressure storage vessels (S, S1, S2, S3), pressure lines (266, 267) and at least one withdrawal point (55, 255),
**characterized in that**
at least one pressure storage vessel (S, S1, S2, S3) has an admissible operating pressure lower than a maximum pressure that can be applied at the tank neck (265), wherein the at least one pressure storage vessel (S, S1, S2, S3) with a lower admissible operating pressure is protected against an inadmissible pressure rise by at least one upstream device that has a shut-off pressure defined by the lower admissible operating pressure, wherein the upstream device is a shut-off valve (SV, 210) or a pressure shut-off valve unit (PSV, 200) or an electromagnetically actuable cut-off valve in interaction with an electronic pressure measurement device and a control unit (300) or else a combination of the stated devices that can be connected upstream.

3. Pressure storage system according to Claim 2,
**characterized in that**
at least one pressure storage vessel (S, S1, S2, S3) has an admissible operating pressure lower than the admissible operating pressure of at least one further pressure storage vessel (S, S1, S2, S3) in the pressure storage system.

4. Pressure storage system according to Claim 2 or 3,
**characterized in that**
the shut-off valve (SV, 210) has a valve housing (20), a valve chamber with a feed opening (10) and with an outlet opening (11) which faces toward the pressure storage vessel (S), a movable piston (22), and at least one spring (23), wherein the piston (22) has at least one axial connecting duct (14) and is guided in an axially movable manner by at least two sealing elements (41, 42) arranged in the valve chamber, wherein a first piston active surface (A1), which faces toward an inlet region (17) of the valve chamber, of the piston (22) and a sealing body (21) or the valve housing (20) form a valve seat, and wherein, as a result of a change in the pressure in a storage region (19), which adjoins a second piston active surface (A2), of the valve chamber, the piston (22) can be moved axially and a passage opening (13) arranged between the feed opening (10) and the outlet opening (11) can be reversibly closed and opened, wherein, in the unpressurized state, the passage opening (13) is held open by the spring (23).

5. Pressure storage system according to one of Claims 2 to 4,
**characterized in that**
the pressure shut-off valve unit (PSV, 200) has a valve housing (20), a valve chamber with a feed opening (10) and with an outlet opening (11) which faces toward the pressure storage vessel (S), a movable piston (22), and at least one spring (23), wherein the piston (22) has at least one axial connecting duct (14) and is guided in an axially movable manner by at least two sealing elements (41, 42) arranged in the valve chamber, wherein a first piston active surface (A1), which faces toward an inlet region (17) of the valve chamber, of the piston (22) and the sealing body (21) or the valve housing (20) form a valve seat, and wherein, as a result of a change in the pressure in a storage region (19), which adjoins a second piston active surface (A2), of the valve chamber, the piston (22) can be moved axially and a passage opening (13) arranged between the feed opening (10) and the outlet opening (11) can be reversibly closed and opened, wherein, in the unpressurized state, the passage opening (13) is held open by the spring (23), and wherein the storage region (19) of the valve chamber is arranged such that it can be connected to the inlet region (17) of the valve chamber via a withdrawal duct (15, 15a) and via a withdrawal valve (30).

6. Pressure storage system according to one of Claims 2 to 5,
**characterized in that**
the first piston active surface (A1) and the sealing body (21) or the valve housing (20) of the at least one upstream shut-off valve (SV, 210) and/or of the at least one upstream pressure shut-off valve unit (PSV, 200) are designed such that, when the piston (22) is in a closed position, a sealing action is generated at a sealing edge (39) in the region of the outer rim of the first piston active surface (A1).

7. Pressure storage system according to one of Claims 2 to 6,
**characterized in that**
the shut-off pressure of the at least one upstream shut-off valve (SV, 210) and/or of the at least one upstream pressure shut-off valve unit (PSV, 200) is determined substantially by the spring force of the spring (23) and by the piston active surfaces (A1, A2).

8. Pressure storage system according to one of Claims 2 to 7,
**characterized in that**
the pressure shut-off valve unit (PSV, 200) comprises a shut-off valve (SV, 210), a check valve (230) and an overpressure valve (220), wherein said valves are preferably arranged in a common valve housing.

9. Pressure storage system according to one of Claims 2 to 8,
**characterized in that**
at least one shut-off valve (SV, 210) and/or at least one pressure shut-off valve unit (PSV, 200) are arranged in series with respect to one another.

10. Pressure storage system according to one of Claims 2 to 9,
**characterized in that**
at least one shut-off valve (SV, 210) and/or at least one pressure shut-off valve unit (PSV, 200) are arranged in parallel with respect to one another.

11. Pressure storage system according to one of Claims 2 to 10,
**characterized in that**
a shut-off valve (SV, 210) and/or a pressure shut-off valve unit (PSV, 200) protect a downstream subregion of the pressure storage system with at least two pressure storage vessels (S, S1, S2, S3), wherein said at least two pressure storage vessels (S, S1, S2, S3) are arranged in parallel and/or in series with respect to one another, against an inadmissible pressure rise.

12. Pressure storage system according to one of Claims 2 to 11,
**characterized in that**
at least one pressure storage vessel (S, S1, S2, S3) is assigned at least one electromagnetically actuable cut-off valve that can be controlled by a control unit (300).

13. Pressure storage system according to one of Claims 2 to 12,
**characterized in that**
at least one pressure shut-off valve unit (PSV, 200) is arranged between at least one electromagnetically actuable cut-off valve and one pressure storage vessel (S, S1, S2, S3) that is assigned to the at least one electromagnetically actuable cut-off valve.

14. Pressure storage system according to one of Claims 2 to 13,
**characterized in that**
at least one electronic pressure measurement device is arranged at at least one location in the pressure storage system between tank neck (265) and withdrawal point (255), wherein the at least one electronic pressure measurement device is functionally connected to the control unit (300).

## Revendications

1. Procédé de fonctionnement d'un système de stockage sous pression,
**caractérisé en ce que**
au moins deux récipients de stockage sous pression (S, S1, S2, S3), qui présentent des pressions de service admissibles différentes, au moins un récipient de stockage sous pression (S, S1, S2, S3) ayant une pression de service admissible qui est inférieure à une pression maximale qui peut être appliquée à une buse de réservoir (265), et l'au moins un récipient de stockage sous pression (S, S1, S2, S3) qui a une pression de service admissible inférieure étant protégé contre une augmentation de pression inadmissible par au moins un dispositif amont qui a une pression d'arrêt déterminée par la pression de service admissible inférieure, sont remplis en même temps et par le biais de la même buse de réservoir (265).

2. Système de stockage sous pression comprenant une buse de réservoir (265), au moins deux récipients de stockage sous pression (S, S1, S2, S3), des conduites sous pression (266, 267) et au moins un point de soutirage (55, 255),
**caractérisé en ce que**
au moins un récipient de stockage sous pression (S, S1, S2, S3) a une pression de service admissible qui est inférieure à une pression maximale pouvant être appliquée à la buse de réservoir (265), l'au moins un récipient de stockage sous pression (S, S1, S2, S3) ayant une pression de service admissible inférieure protégeant au moins un dispositif amont, qui a une pression d'arrêt déterminée par la pression de service admissible inférieure, contre les augmentations de pression inadmissibles, le dispositif amont étant une vanne d'arrêt (SV, 210) ou une unité de vanne d'arrêt de pression (DSV, 200) ou une vanne de sectionnement à commande électromagnétique en coopération avec un dispositif de mesure de pression électronique et une unité de commande (300) ou également une combinaison desdits dispositifs amont.

3. Système de stockage sous pression selon la revendication 2,
**caractérisé en ce que**
au moins un récipient de stockage sous pression (S, S1, S2, S3) a une pression de service admissible qui est inférieure à la pression de service admissible d'au moins un autre récipient de stockage sous pression (S, S1, S2, S3) dans le système de stockage sous pression.

4. Système de stockage de pression selon la revendication 2 ou 3,
**caractérisé en ce que**
la vanne d'arrêt (SV, 210) comporte un boîtier de vanne (20), une chambre de vanne pourvue d'une ouverture d'entrée (10) et d'une ouverture de sortie (11) dirigée vers le récipient de stockage sous pression (S), un piston mobile (22), et au moins un ressort (23), le piston (22) comportant au moins un conduit de liaison axial (14) et étant guidé de manière mobile axialement à travers au moins deux éléments d'étanchéité (41, 42) disposés dans la chambre de vanne, une première surface de piston efficace (A1) du piston (22), laquelle est dirigée vers une zone d'admission (17) de la chambre de vanne, et un corps d'étanchéité (21) ou le boîtier de vanne (20) formant un siège de vanne, et le piston (22) pouvant être déplacé axialement et une ouverture de passage (13) disposée entre l'ouverture d'entrée (10), et l'ouverture de sortie (11) pouvant être fermée et ouverte de manière réversible, par variation de la pression dans une zone de stockage (19) de la chambre de vanne qui est adjacente à une deuxième surface de piston efficace (A2), l'ouverture de passage (13) étant maintenue ouverte par le ressort (23) à l'état non pressurisé.

5. Système de stockage de pression selon l'une des revendications 2 à 4,
**caractérisé en ce que**
l'unité de vanne d'arrêt sous pression (DSV, 200) comporte un boîtier de vanne (20), une chambre de vanne pourvue d'une ouverture d'entrée (10) et d'une ouverture de sortie (11) dirigée vers le récipient de stockage sous pression (S), un piston mobile (22) et au moins un ressort (23), le piston (22) comportant au moins un conduit de liaison axial (14) et étant guidé de manière mobile axialement à travers au moins deux éléments d'étanchéité (41, 42) disposés dans la chambre de vanne, une première surface de piston efficace (A1) du piston (22), laquelle est dirigée vers une zone d'admission (17) de la chambre de vanne, et le corps d'étanchéité (21) ou le boîtier de vanne (20) formant un siège de vanne, et le piston (22) pouvant être déplacé axialement, et une ouverture de passage (13) disposée entre l'ouverture d'entrée (10) et l'ouverture de sortie (11) pouvant être fermée et ouverte de manière réversible, par variation de la pression dans une zone de stockage (19) de la chambre de vanne qui est adjacente à une deuxième surface de piston efficace (A2), l'ouverture de passage (13) étant maintenue ouverte par le ressort (23) à l'état non pressurisé et la zone de stockage (19) de la chambre de vanne étant disposée de manière à pouvoir être reliée à la zone d'admission (17) de la chambre de vanne par le biais d'un conduit de soutirage (15, 15a) et d'une vanne de soutirage (30).

6. Système de stockage de pression selon l'une des revendications 2 à 5,
**caractérisé en ce que**
la première surface de piston efficace (A1) et le corps d'étanchéité (21) ou le boîtier de vanne (20) de l'au moins une vanne d'arrêt amont (SV , 210) et/ou de l'au moins une unité de vanne d'arrêt sous pression en amont (DSV, 200) est conçus de telle sorte que, lorsque le piston (22) est dans la position fermée, une action d'étanchéité se produise sur un bord d'étanchéité (39) dans la zone du bord extérieur de la première surface de piston efficace (A1).

7. Système de stockage sous pression selon l'une des revendications 2 à 6,
**caractérisé en ce que**
la pression d'arrêt de l'au moins une vanne d'arrêt amont (SV, 210) et/ou de l'au moins une unité de vanne d'arrêt sous pression amont (DSV, 200) est sensiblement déterminée par la force du ressort (23) et les surfaces de piston efficaces (A1, A2).

8. Système de stockage sous pression selon l'une des revendications 2 à 7,
**caractérisé en ce que**
l'unité de vanne d'arrêt sous pression (DSV, 200) comprend une vanne d'arrêt (SV, 210), une vanne anti-retour (230) et une vanne de surpression (220), ces vannes étant de préférence disposées dans un boîtier de vanne commun.

9. Système de stockage sous pression selon l'une des revendications 2 à 8,
**caractérisé en ce que**
au moins une vanne d'arrêt (SV, 210) et/ou au moins une unité de vanne d'arrêt sous pression (DSV, 200) sont disposées en série l'une avec l'autre.

10. Système accumulateur de pression selon l'une des revendications 2 à 9,
**caractérisé en ce que**
au moins une vanne d'arrêt (SV, 210) et/ou au moins une unité de vanne d'arrêt sous pression (DSV, 200) sont disposées en parallèle l'une avec l'autre.

11. Système de stockage sous pression selon l'une des revendications 2 à 10,
**caractérisé en ce que**
une vanne d'arrêt (SV, 210) et/ou une unité de vanne d'arrêt sous pression (DSV, 200) protègent une sous-zone aval du système de stockage sous pression, comprenant au moins deux récipients de stockage sous pression (S, S1, S2, S3), contre une augmentation de pression inadmissible, ces au moins deux récipients de stockage sous pression (S, S1, S2, S3) étant disposés en parallèle et/ou en série l'un avec l'autre.

12. Système de stockage sous pression selon l'une des revendications 2 à 11,
**caractérisé en ce que**
au moins un récipient de stockage sous pression (S, S1, S2, S3) est associé à au moins une vanne d'arrêt à commande électromagnétique commandable par une unité de commande (300).

13. Système de stockage sous pression selon l'une des revendications 2 à 12,
**caractérisé en ce que**
au moins une unité de vanne d'arrêt sous pression (DSV, 200) est disposée entre au moins une vanne de sectionnement à commande électromagnétique et un récipient de stockage sous pression (S, S1, S2, S3) associé à l'au moins une vanne de sectionnement à commande électromagnétique.

14. Système de stockage sous pression selon l'une des revendications 2 à 13,
**caractérisé en ce que**
au moins un dispositif de mesure de pression électronique est disposé en au moins un emplacement du système de stockage de pression, entre la buse de réservoir (265) et le point de soutirage (255), l'au moins un dispositif de mesure de pression électronique étant fonctionnellement relié à l'unité de commande (300).
